# EUROPEAN PATENT APPLICATION

(11) **EP 4 597 634 A1**
(43) Date of publication of application: **06.08.2025**
(21) Application number: 23871491.9
(22) Date of filing: 07.08.2023
(51) Int. Cl.: H01M 4/62, H01M 4/13, H01M 4/139, H01M 4/1397, H01M 4/58

(54) **BINDER COMPOSITION FOR NONAQUEOUS SECONDARY BATTERY ELECTRODES, SLURRY COMPOSITION FOR NONAQUEOUS SECONDARY BATTERY ELECTRODES, ELECTRODE FOR NONAQUEOUS SECONDARY BATTERIES, AND NONAQUEOUS SECONDARY BATTERY**

(30) Priority: 29.09.2022 JP 2022156964
(71) Applicant: Zeon Corporation, Tokyo 100-8246 (JP)
(72) Inventor: MATSUO, Yusaku, Tokyo 100-8246 (JP)
(74) Representative: Maiwald GmbH
(86) International application number: PCT/JP2023/028828
(87) International publication number: WO 2024/070249

(57) **Abstract**

A binder composition for a non-aqueous secondary battery electrode contains a polymer X that includes an acidic group-containing monomer unit in a proportion of not less than 3 mass% and not more than 20 mass% and a repeating unit derived from an unsaturated monomer A in a proportion of not less than 5 mass% and less than 50 mass%. The unsaturated monomer A has a solubility in water of not less than 1 g/100 mL and not more than 15 g/100 mL and has a glass-transition temperature of 40°C or lower.

## Description

### TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications. Consequently, in recent years, studies have been made to improve battery members such as electrodes for the purpose of achieving even higher secondary battery performance.

An electrode for a secondary battery normally includes an electrode mixed material layer. The electrode mixed material layer is formed, for example, through application and drying on a current collector of a composition (slurry composition for a non-aqueous secondary battery electrode) in the form of a slurry having an electrode active material, a binder composition for a non-aqueous secondary battery electrode containing a polymer serving a role as a binder, and so forth dispersed in a dispersion medium.

In recent years, there have been attempts to improve binder compositions used in the formation of electrode mixed material layers in order to achieve further improvement of secondary battery performance (for example, refer to Patent Literature (PTL) 1).

For example, PTL 1 reports that a binder composition containing a water-soluble polymer that includes 50 mass% to 95 mass% of structural units derived from an ethylenically unsaturated carboxylic acid ester monomer and 5 mass% to 50 mass% of structural units derived from an ethylenically unsaturated carboxylic acid salt monomer and that has a weight-average molecular weight of 500,000 or more can improve electrode formability, substrate close adherence, and pliability without loss of dispersibility and viscosity adjustment function of an aqueous electrode composition.

### CITATION LIST

### Patent Literature

PTL 1: WO2012/008539A1

### SUMMARY

### (Technical Problem)

However, the binder composition of the conventional technique described above leaves room for improvement in terms of causing an electrode mixed material layer to display excellent flexibility.

Accordingly, one object of the present disclosure is to provide a binder composition for a non-aqueous secondary battery electrode that can cause an electrode mixed material layer to display excellent flexibility.

Another object of the present disclosure is to provide a slurry composition for a non-aqueous secondary battery electrode that can cause an electrode mixed material layer to display excellent flexibility.

Another object of the present disclosure is to provide an electrode for a non-aqueous secondary battery including an electrode mixed material layer that can display excellent flexibility.

Another object of the present disclosure is to provide a non-aqueous secondary battery that includes this electrode for a non-aqueous secondary battery.

### (Solution to Problem)

The inventor conducted diligent investigation with the aim of solving the problem set forth above. The inventor discovered that it is possible to form an electrode mixed material layer having excellent flexibility by using a binder composition containing a polymer X that includes an acidic group-containing monomer unit and a repeating unit derived from a specific unsaturated monomer in specific proportions, and, in this manner, completed the present disclosure.

Specifically, with the aim of advantageously solving the problem set forth above, [1] a presently disclosed binder composition for a non-aqueous secondary battery electrode comprises a polymer X, wherein the polymer X includes an acidic group-containing monomer unit in a proportion of not less than 3 mass% and not more than 20 mass% and a repeating unit derived from an unsaturated monomer A in a proportion of not less than 5 mass% and less than 50 mass%, the unsaturated monomer A has a solubility in water of not less than 1 g/100 mL and not more than 15 g/100 mL, and the unsaturated monomer A has a glass-transition temperature of 40°C or lower.

With a binder composition containing a polymer X that includes an acidic group-containing monomer unit and a repeating unit derived from the specific unsaturated monomer A in specific proportions in this manner, it is possible to cause an electrode mixed material layer to display excellent flexibility.

Note that when a polymer is said to "include a monomer unit" in the present disclosure, this means that "a polymer obtained using that monomer includes a repeating unit derived from the monomer". Also note that a "repeating unit derived from an unsaturated monomer A" may also be referred to as an "unsaturated monomer A unit" in the present specification.

Moreover, the "proportional content (mass%)" of each monomer unit (repeating unit) included in a polymer referred to in the present disclosure can be measured by a nuclear magnetic resonance (NMR) method such as ¹H-NMR.

Furthermore, the "solubility in water" referred to in the present disclosure means the solubility (dissolved amount) in 100 g of water at a temperature of 20°C.

Also, the "glass-transition temperature" of the unsaturated monomer A referred to in the present disclosure indicates the glass-transition temperature (°C) that is determined by using a differential scanning calorimeter (DSC7200 produced by Seiko Instruments Inc.) to measure a polymer of the unsaturated monomer A by itself (i.e., a homopolymer) in accordance with JIS K7121 under conditions of a measurement temperature of -100°C to 180°C and a heating rate of 5°C/min. Note that the homopolymer of the unsaturated monomer A is taken to be a polymer having a weight-average molecular weight of not less than 10,000 and not more than 1,000,000.

**[2]** In the binder composition for a non-aqueous secondary battery electrode according to the foregoing [1], the polymer X can include the repeating unit derived from the unsaturated monomer A in a proportion of 20 mass% or less.

**[3] In** the binder composition for a non-aqueous secondary battery electrode according to the foregoing [1] or [2], the polymer X preferably includes a hydroxy group-containing acrylic acid ester monomer unit in a proportion of not less than 55 mass% and not more than 90 mass%.

When the polymer X further includes a hydroxy group-containing acrylic acid ester monomer unit in the specific proportion set forth above, adhesiveness and flexibility of an electrode mixed material layer that is formed using a slurry composition containing the binder composition can be improved.

[4] **In** the binder composition for a non-aqueous secondary battery electrode according to any one of the foregoing [1] to [3], the polymer X preferably has a weight-average molecular weight of not less than 50,000 and less than 500,000.

When the weight-average molecular weight (Mw) of the polymer X is within the specific range set forth above, dispersibility of a slurry composition that is produced using the binder composition can be improved, and adhesiveness of an electrode mixed material layer that is formed using the slurry composition can also be improved.

Note that the weight-average molecular weight (Mw) referred to in the present disclosure can be measured by a method described in the EXAMPLES section of the present specification.

**[5] In** the binder composition for a non-aqueous secondary battery electrode according to any one of the foregoing [1] to [5], the polymer X preferably includes a hydroxy group-containing methacrylic acid ester monomer unit in a proportion of not less than 2 mass% and not more than 30 mass%.

When the polymer X further includes a hydroxy group-containing methacrylic acid ester monomer unit in the specific proportion set forth above, adhesiveness and flexibility of an electrode mixed material layer that is formed using a slurry composition containing the binder composition can be improved.

**[6] In** the binder composition for a non-aqueous secondary battery electrode according to any one of the foregoing [1] to [5], the unsaturated monomer A preferably includes one or more selected from the group consisting of 2-methoxyethyl acrylate, ethyl acrylate, methyl acrylate, and vinyl acetate.

When any of the specific monomers set forth above is used as the unsaturated monomer A, dispersibility of a slurry composition that is produced using the binder composition can be further improved, and adhesiveness and flexibility of an electrode mixed material layer that is formed using the slurry composition can also be improved.

[7] In the binder composition for a non-aqueous secondary battery electrode according to any one of the foregoing [1] to [6], it is preferable that the polymer X includes either or both of a hydroxy group-containing acrylic acid ester monomer unit and a hydroxy group-containing methacrylic acid ester monomer unit and that total proportional content of the hydroxy group-containing acrylic acid ester monomer unit and the hydroxy group-containing methacrylic acid ester monomer unit in the polymer X is not less than 30 mass% and not more than 90 mass%.

By using the specific polymer set forth above as the polymer X, it is possible to improve dispersibility of a slurry composition that is produced using the binder composition, it is also possible to improve adhesiveness and flexibility of an electrode mixed material layer that is formed using the slurry composition, and it is also possible to enhance output characteristics of an obtained secondary battery.

[8] In the binder composition for a non-aqueous secondary battery electrode according to any one of the foregoing [1] to [7], it is preferable that the polymer X includes either or both of a hydroxy group-containing acrylic acid ester monomer unit and a hydroxy group-containing methacrylic acid ester monomer unit and that total proportional content of the repeating unit derived from the unsaturated monomer A, the hydroxy group-containing acrylic acid ester monomer unit, and the hydroxy group-containing methacrylic acid ester monomer unit in the polymer X is 80 mass% or more.

By using the specific polymer set forth above as the polymer X, it is possible to improve dispersibility of a slurry composition that is produced using the binder composition, it is also possible to improve adhesiveness and flexibility of an electrode mixed material layer that is formed using the slurry composition, and it is also possible to enhance output characteristics of an obtained secondary battery.

[9] In the binder composition for a non-aqueous secondary battery electrode according to any one of the foregoing [1] to [8], the polymer X can include a (meth)acrylamide monomer unit in a proportion of not less than 3 mass% and not more than 20 mass%.

By using the specific polymer set forth above as the polymer X, it is possible to improve adhesiveness and flexibility of an obtained electrode mixed material layer. Note that in the present specification, "(meth)acrylamide" indicates "acrylamide" or "methacrylamide".

Moreover, with the aim of advantageously solving the problem set forth above, [10] a presently disclosed slurry composition for a non-aqueous secondary battery electrode comprises: an electrode active material; and the binder composition for a non-aqueous secondary battery electrode according to any one of the foregoing [1] to [9].

A slurry composition for a non-aqueous secondary battery electrode that contains any one of the binder compositions set forth above in this manner can cause an electrode mixed material layer to display excellent flexibility.

[11] The slurry composition for a non-aqueous secondary battery electrode according to the foregoing [10] preferably further comprises a particulate polymer Y including a hydrophilic group.

When the slurry composition for a non-aqueous secondary battery electrode further contains a particulate polymer Y including a hydrophilic group, dispersibility of the slurry composition and adhesiveness and flexibility of an electrode mixed material layer that is formed using the slurry composition can be improved.

**[12]** In the slurry composition for a non-aqueous secondary battery electrode according to the foregoing [11], proportional content of the particulate polymer Y is preferably not less than 0.1 mass% and not more than 5 mass% when all solid content contained in the slurry composition for a non-aqueous secondary battery electrode is taken to be 100 mass%.

When the proportional content of the particulate polymer Y is within the specific range set forth above, dispersibility of the slurry composition and adhesiveness and flexibility of an electrode mixed material layer that is formed using the slurry composition can be improved, and internal resistance of a secondary battery can also be reduced.

**[13]** In the slurry composition for a non-aqueous secondary battery electrode according to any one of the foregoing [10] to [12], the electrode active material preferably includes olivine-type lithium iron phosphate.

When olivine-type lithium iron phosphate is used as the electrode active material, stability against overcharging of a secondary battery can be improved.

[14] The slurry composition for a non-aqueous secondary battery electrode according to any one of the foregoing [10] to [13] preferably further comprises a conductive material that includes one or more carbon nanotubes.

By using carbon nanotubes as the conductive material, it is possible to reduce internal resistance of a non-aqueous secondary battery.

[15] In the slurry composition for a non-aqueous secondary battery electrode according to the foregoing [14], the conductive material preferably further includes a particulate conductive material.

By further using a particulate conductive material as the conductive material, it is possible to further improve flexibility of an electrode mixed material layer that is formed using the slurry composition.

Furthermore, with the aim of advantageously solving the problem set forth above, [16] a presently disclosed electrode for a non-aqueous secondary battery comprises an electrode mixed material layer formed using the slurry composition for a non-aqueous secondary battery electrode according to any one of the foregoing [10] to [15].

The presently disclosed electrode for a non-aqueous secondary battery includes an electrode mixed material layer that is formed using any one of the slurry compositions for a non-aqueous secondary battery electrode set forth above and that can display excellent flexibility.

Also, with the aim of advantageously solving the problem set forth above, [17] a presently disclosed non-aqueous secondary battery comprises the electrode for a non-aqueous secondary battery according to the foregoing [16].

A secondary battery that includes the electrode for a non-aqueous secondary battery set forth above has reduced internal resistance and excellent battery characteristics, for example.

### (Advantageous Effect)

According to the present disclosure, it is possible to provide a binder composition for a non-aqueous secondary battery electrode that can cause an electrode mixed material layer to display excellent flexibility.

Moreover, according to the present disclosure, it is possible to provide a slurry composition for a non-aqueous secondary battery electrode that can cause an electrode mixed material layer to display excellent flexibility.

Furthermore, according to the present disclosure, it is possible to provide an electrode for a non-aqueous secondary battery including an electrode mixed material layer that can display excellent flexibility.

Also, according to the present disclosure, it is possible to provide a non-aqueous secondary battery that includes this electrode for a non-aqueous secondary battery.

### DETAILED DESCRIPTION

The following provides a detailed description of embodiments of the present disclosure.

The presently disclosed binder composition for a non-aqueous secondary battery electrode (hereinafter, also referred to simply as a "binder composition") can be used in production of a slurry composition for a non-aqueous secondary battery electrode (hereinafter, also referred to simply as a "slurry composition"). Moreover, a slurry composition for a non-aqueous secondary battery electrode that has been produced using the presently disclosed binder composition for a non-aqueous secondary battery electrode can be used in formation of an electrode mixed material layer that is included in an electrode (electrode for a non-aqueous secondary battery) of a non-aqueous secondary battery such as a lithium ion secondary battery. Furthermore, a feature of the presently disclosed non-aqueous secondary battery (hereinafter, also referred to simply as a "secondary battery") is that an electrode for a non-aqueous secondary battery (hereinafter, also referred to simply as an "electrode") including an electrode mixed material layer that has been formed from the presently disclosed slurry composition for a non-aqueous secondary battery electrode is used therein.

### (Binder composition for non-aqueous secondary battery electrode)

A feature of the presently disclosed binder composition is that it contains a specific polymer X. The presently disclosed binder composition can cause an electrode mixed material layer that has been formed using the binder composition to display excellent flexibility.

As a result of an electrode mixed material layer that has been formed from a slurry composition produced using the presently disclosed binder composition having excellent flexibility as described above, the electrode mixed material layer can inhibit the occurrence of cracking in a situation in which an electrode is subjected to rolling, folding, or the like in accordance with the shape of a secondary battery during secondary battery production, for example. Consequently, an electrode mixed material layer that has been formed from a slurry composition produced using the presently disclosed binder composition has a uniform structure and little cracking, and thus can reduce internal resistance of a secondary battery or enhance output characteristics of the secondary battery.

Note that the presently disclosed binder composition can sufficiently display the desired effects described above even when the content of the presently disclosed binder composition (i.e., the content of the specific polymer X) in a slurry composition is small. Therefore, it is possible to restrict the content of the presently disclosed binder composition (i.e., the content of the specific polymer X) in a slurry composition to a small amount and reduce internal resistance of a secondary battery while also sufficiently improving flexibility of a formed electrode mixed material layer.

Note that the presently disclosed binder composition may optionally further contain a solvent. Moreover, the presently disclosed binder composition may optionally further contain components other than the polymer X and the solvent (i.e., other components).

### <Polymer X>

The polymer X is a component that can function as a dispersant for causing good dispersion of components such as an electrode active material and a conductive material in a slurry composition that is produced using the binder composition. In addition, the polymer X can also function as a binder in an electrode mixed material layer that is formed using the slurry composition.

The polymer X includes an acidic group-containing monomer unit and a repeating unit derived from a specific unsaturated monomer A (i.e., an unsaturated monomer A unit). The unsaturated monomer A has a solubility in water that is within a specific range and also has a glass-transition temperature that is not higher than a specific value. The proportional content of the acidic group-containing monomer unit and the proportional content of the unsaturated monomer A unit in the polymer X are within specific ranges.

Moreover, the polymer X may further include one or more among a hydroxy group-containing acrylic acid ester monomer unit, a hydroxy group-containing methacrylic acid ester monomer unit, and a (meth)acrylamide monomer unit in addition to the acidic group-containing monomer unit and the unsaturated monomer A unit described above. Specifically, the polymer X may include a hydroxy group-containing acrylic acid ester monomer unit and a hydroxy group-containing methacrylic acid ester monomer unit in addition to the acidic group-containing monomer unit and the unsaturated monomer A unit described above. Alternatively, the polymer X may include either or both of a hydroxy group-containing acrylic acid ester monomer unit and a hydroxy group-containing methacrylic acid ester monomer unit in addition to the acidic group-containing monomer unit and the unsaturated monomer A unit described above. Further alternatively, the polymer X may further include a hydroxy group-containing acrylic acid ester monomer unit, a hydroxy group-containing methacrylic acid ester monomer unit, and a (meth)acrylamide monomer unit in addition to the acidic group-containing monomer unit and the unsaturated monomer A unit described above.

Furthermore, the polymer X may further include monomer units other than the above-described acidic group-containing monomer unit, unsaturated monomer A unit, hydroxy group-containing acrylic acid ester monomer unit, hydroxy group-containing methacrylic acid ester monomer unit, and (meth)acrylamide monomer unit (hereinafter, also referred to as "other monomer units") to the extent that the desired effects according to the present disclosure are obtained. It may also of course be the case that the polymer X does not include other monomer units.

Note that the polymer X is normally a water-soluble polymer, but is not specifically limited thereto. When a polymer is said to be "water-soluble" in the present disclosure, this means that when 0.5 g (in terms of solid content) of the polymer is dissolved in 100 g of water at a temperature of 25°C, insoluble content is less than 5.0 mass%.

### <<Acidic group-containing monomer unit>>

Examples of acidic group-containing monomers that can form the acidic group-containing monomer unit in the polymer X include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group upon hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Note that a hydrogen atom in a carboxy group of a carboxy group-containing monomer such as described above may have been substituted by an inorganic ion or an organic ion such that the monomer is in the form of an inorganic salt or an organic salt. In other words, the carboxy group-containing monomer may be in the form of a carboxylate salt.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that a hydrogen atom in a sulfo group of a sulfo group-containing monomer such as described above may have been substituted by an inorganic ion or an organic ion such that the monomer is in the form of an inorganic salt or an organic salt. In other words, the sulfo group-containing monomer may be in the form of a sulfonate salt.

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that a hydrogen atom in a phosphate group of a phosphate group-containing monomer such as described above may have been substituted by an inorganic ion or an organic ion such that the monomer is in the form of an inorganic salt or an organic salt. In other words, the phosphate group-containing monomer may be in the form of a phosphate salt.

One of these acidic group-containing monomers may be used individually, or two or more of these acidic group-containing monomers may be used in a freely selected ratio.

Moreover, from a viewpoint of further improving adhesiveness of a formed electrode mixed material layer, it is preferable to use a carboxy group-containing monomer or a sulfo group-containing monomer, more preferable to use a carboxy group-containing monomer, and even more preferable to use acrylic acid as an acidic group-containing monomer.

The proportional content of the acidic group-containing monomer unit in the polymer X when all monomer units (all repeating units) included in the polymer X are taken to be 100 mass% is required to be 3 mass% or more, is preferably 4.5 mass% or more, more preferably 5 mass% or more, and even more preferably 6 mass% or more, and may be 7 mass% or more. Moreover, the proportional content of the acidic group-containing monomer unit in the polymer X when all monomer units (all repeating units) included in the polymer X are taken to be 100 mass% is required to be 20 mass% or less, and is preferably 17.5 mass% or less, and more preferably 15 mass% or less.

When the proportional content of the acidic group-containing monomer unit in the polymer X is 3 mass% or more, dispersibility of a slurry composition that is produced using the binder composition can be improved, presumably due to increased interactions between the polymer X and an electrode active material. On the other hand, when the proportional content of the acidic group-containing monomer unit in the polymer X is 20 mass% or less, adhesiveness and flexibility of an electrode mixed material layer that is formed using the slurry composition can be improved, presumably due to increased flexibility of molecular chains of the polymer X. Moreover, when the proportional content of the acidic group-containing monomer unit in the polymer X is 20 mass% or less, dispersibility of the slurry composition can be further improved, presumably due to reduced electrostatic repulsion of the polymer X and increased adsorptivity of the polymer X with respect to an electrode active material.

### <<Unsaturated monomer A unit>>

The unsaturated monomer A unit is a repeating unit that is derived from an unsaturated monomer A.

The unsaturated monomer A unit in the polymer X can impart adhesiveness and flexibility to an electrode mixed material layer that is formed using a slurry composition containing the binder composition.

The solubility in water of the unsaturated monomer A that can form the unsaturated monomer A unit is required to be 1 g/100 mL or more, and is more preferably 1.2 g/100 mL or more, even more preferably 1.5 g/100 mL or more, and further preferably 2 g/100 mL or more. Moreover, the solubility in water of the unsaturated monomer A that can form the unsaturated monomer A unit is required to be 15 g/100 mL or less, and is preferably 13 g/100 mL or less, and more preferably 12 g/100 mL or less.

When the solubility in water of the unsaturated monomer A is 1 g/100 mL or more, reduction of solubility in water of the polymer X can be inhibited, and sufficiently high dispersibility of a slurry composition that is produced using the binder composition can be ensured. Moreover, when the solubility in water of the unsaturated monomer A is 1 g/100 mL or more, sufficiently high polymerizability of the unsaturated monomer A during production of the polymer X can be ensured. On the other hand, when the solubility in water of the unsaturated monomer A is 15 g/100 mL or less, adhesiveness of an electrode mixed material layer that is formed using a slurry composition containing the binder composition can be improved, presumably due to increased affinity of the polymer X with an electrode active material.

The glass-transition temperature of the unsaturated monomer A that can form the unsaturated monomer A unit is required to be 40°C or lower, and is preferably 30°C or lower, more preferably 10°C or lower, and even more preferably 0°C or lower.

When the glass-transition temperature of the unsaturated monomer A is 40°C or lower, adhesiveness and flexibility of an electrode mixed material layer that is formed using a slurry composition containing the binder composition can be sufficiently improved, presumably due to increased flexibility of the polymer X.

Note that the lower limit for the glass-transition temperature of the unsaturated monomer A is not specifically limited, but is preferably -60°C or higher, and more preferably -55°C or higher, for example.

No specific limitations are placed on the unsaturated monomer A that can form the unsaturated monomer A unit so long as it is a monomer that includes an ethylenically unsaturated bond, that has a solubility in water within any of the specific ranges set forth above, and that has a glass-transition temperature of not higher than any of the specific values set forth above.

The unsaturated monomer A may be 2-methoxyethyl acrylate (solubility in water: 11.6 g/100 mL; glass-transition temperature: -50°C), ethyl acrylate (solubility in water: 1.5 g/100 mL; glass-transition temperature: -22°C), methyl acrylate (solubility in water: 6 g/100 mL; glass-transition temperature: 3°C), vinyl acetate (solubility in water: 2.5 g/100 mL; glass-transition temperature: 32°C), or the like, for example.

One of these monomers may be used individually, or two or more of these monomers may be used in combination in a freely selected ratio.

In particular, it is preferable to use 2-methoxyethyl acrylate, ethyl acrylate, and methyl acrylate, and particularly preferable to use 2-methoxyethyl acrylate as the unsaturated monomer A.

The proportional content of the unsaturated monomer A unit in the polymer X when all monomer units (all repeating units) included in the polymer X are taken to be 100 mass% is required to be 5 mass% or more, is preferably 6 mass% or more, and more preferably 7 mass% or more, and may be 25 mass% or more, may be 27.5 mass% or more, or may be 30 mass% or more. Moreover, the proportional content of the unsaturated monomer A unit in the polymer X when all monomer units (all repeating units) included in the polymer X are taken to be 100 mass% is required to be less than 50 mass%, is preferably 47 mass% or less, and more preferably 42 mass% or less, and may be 20 mass% or less, may be 17.5 mass% or less, or may be 15 mass% or less.

When the proportional content of the unsaturated monomer A unit in the polymer X is 5 mass% or more, adhesiveness and flexibility of an electrode mixed material layer that is formed using a slurry composition containing the binder composition can be improved. On the other hand, when the proportional content of the unsaturated monomer A unit in the polymer X is less than 50 mass%, reduction of solubility in water of the polymer X can be inhibited, and dispersibility of a slurry composition that is produced using the binder composition can be increased.

In particular, in a case in which the proportional content of the unsaturated monomer A unit in the polymer X is not less than 25 mass% and not more than 50 mass%, dispersibility of an obtained slurry composition can be even further increased, which makes it possible to enhance output characteristics of an obtained secondary battery.

### <<Hydroxy group-containing acrylic acid ester monomer unit>>

The polymer X preferably further includes a hydroxy group-containing acrylic acid ester monomer unit.

When the polymer X further includes a hydroxy group-containing acrylic acid ester monomer unit, adhesiveness of an electrode mixed material layer that is formed using a slurry composition containing the binder composition can be improved, presumably due to hydroxy group interactions between molecules of the polymer X. Moreover, when the polymer X further includes a hydroxy group-containing acrylic acid ester monomer unit, flexibility of the electrode mixed material layer can be further improved, presumably due to further increased flexibility of molecular chains of the polymer X.

Examples of hydroxy group-containing acrylic acid ester monomers that can form the hydroxy group-containing acrylic acid ester monomer unit in the polymer X include alkanol esters of acrylic acid (also referred to as "acrylic acid hydroxyalkyl ester monomers") such as 2-hydroxyethyl acrylate, 2-hydroxypropyl acrylate, and 4-hydroxybutyl acrylate; and esters of acrylic acid and polyalkylene glycol (also referred to as "acrylic acid polyalkylene glycol ester monomers") represented by a general formula: CH₂=CH-COO-(C_{q}H_{2q}O)ₚ-H (where p indicates an integer of 2 to 9 and q indicates an integer of 2 to 4). Note that one of these hydroxy group-containing acrylic acid ester monomers may be used individually, or two or more of these hydroxy group-containing acrylic acid ester monomers may be used in a freely selected ratio.

Of these examples, it is preferable to use an alkanol ester of acrylic acid (acrylic acid hydroxyalkyl ester monomer) such as 2-hydroxyethyl acrylate, 2-hydroxypropyl acrylate, or 4-hydroxybutyl acrylate as a hydroxy group-containing acrylic acid ester monomer from a viewpoint of improving adhesiveness and flexibility of an electrode mixed material layer.

The proportional content of the hydroxy group-containing acrylic acid ester monomer unit in the polymer X when all monomer units (all repeating units) included in the polymer X are taken to be 100 mass% is preferably 55 mass% or more, more preferably 57.5 mass% or more, even more preferably 60 mass% or more, and more preferably 65 mass% or more, and is preferably 90 mass% or less, preferably 85 mass% or less, and more preferably 80 mass% or less.

When the proportional content of the hydroxy group-containing acrylic acid ester monomer unit in the polymer X is not less than any of the lower limits set forth above, adhesiveness of an electrode mixed material layer that is formed using a slurry composition containing the binder composition can be improved, presumably due to increased hydroxy group interactions between molecules of the polymer X. Moreover, when the proportional content of the hydroxy group-containing acrylic acid ester monomer unit in the polymer X is not less than any of the lower limits set forth above, flexibility of the electrode mixed material layer can be sufficiently improved, presumably due to further increased flexibility of molecular chains of the polymer X. On the other hand, when the proportional content of the hydroxy group-containing acrylic acid ester monomer unit in the polymer X is not more than any of the upper limits set forth above, an excessive increase of flexibility of molecular chains of the polymer X can be avoided, and adhesiveness of the electrode mixed material layer can be increased.

### <<Hydroxy group-containing methacrylic acid ester monomer unit>>

The polymer X preferably further includes a hydroxy group-containing methacrylic acid ester monomer unit.

When the polymer X further includes a hydroxy group-containing methacrylic acid ester monomer unit, adhesiveness of an electrode mixed material layer that is formed using a slurry composition containing the binder composition can be improved, presumably due to hydroxy group interactions between molecules of the polymer X. Moreover, when the polymer X further includes a hydroxy group-containing methacrylic acid ester monomer unit, flexibility of the electrode mixed material layer can be further improved, presumably due to the spatial structure of the polymer X spreading out due to steric hinderance of molecular chains of the polymer X and thereby enabling the polymer X to thinly cover the surface of an electrode active material over a wide range.

Examples of hydroxy group-containing methacrylic acid ester monomers that can form the hydroxy group-containing methacrylic acid ester monomer unit in the polymer X include alkanol esters of methacrylic acid (also referred to as "methacrylic acid hydroxyalkyl ester monomers") such as 2-hydroxyethyl methacrylate and 2-hydroxypropyl methacrylate; and esters of methacrylic acid and polyalkylene glycol (also referred to as "methacrylic acid polyalkylene glycol ester monomers") represented by a general formula: CH₂=C(CH₃)-COO-(CₛH₂ₛO)ᵣ-H (where r indicates an integer of 2 to 9 and s indicates an integer of 2 to 4). Note that one of these hydroxy group-containing methacrylic acid ester monomers may be used individually, or two or more of these hydroxy group-containing methacrylic acid ester monomers may be used in a freely selected ratio.

Of these examples, it is preferable to use an alkanol ester of methacrylic acid (methacrylic acid hydroxyalkyl ester monomer) such as 2-hydroxyethyl methacrylate or 2-hydroxypropyl methacrylate as a hydroxy group-containing methacrylic acid ester monomer from a viewpoint of further improving adhesiveness and flexibility of an electrode mixed material layer.

The proportional content of the hydroxy group-containing methacrylic acid ester monomer unit in the polymer X when all monomer units (all repeating units) included in the polymer X are taken to be 100 mass% is preferably 2 mass% or more, more preferably 5 mass% or more, even more preferably 6 mass% or more, and further preferably 7 mass% or more, and is preferably 30 mass% or less, more preferably 20 mass% or less, and even more preferably 15 mass% or less.

When the proportional content of the hydroxy group-containing methacrylic acid ester monomer unit in the polymer X is within any of the specific ranges set forth above, adhesiveness and flexibility of an electrode mixed material layer that is formed using a slurry composition containing the binder composition can be even further improved.

Note that the proportional content of the hydroxy group-containing methacrylic acid ester monomer unit in the polymer X when all monomer units (all repeating units) included in the polymer X are taken to be 100 mass% can be set as 0 mass% or more, or can be set as 10 mass% or less.

### <<Total content of hydroxy group-containing acrylic acid ester monomer unit and hydroxy group-containing methacrylic acid ester monomer unit>>

In a case in which the polymer X includes either or both of a hydroxy group-containing acrylic acid ester monomer unit and a hydroxy group-containing methacrylic acid ester monomer unit, the total proportional content of the hydroxy group-containing acrylic acid ester monomer unit and the hydroxy group-containing methacrylic acid ester monomer unit in the polymer X when all monomer units (all repeating units) included in the polymer X are taken to be 100 mass% is preferably 30 mass% or more, more preferably 35 mass% or more, and even more preferably 40 mass% or more, is preferably 90 mass% or less, and more preferably 85 mass% or less, and may be 60 mass% or less, may be 57.5 mass% or less, or may be 55 mass% or less. When the total proportional content of the hydroxy group-containing acrylic acid ester monomer unit and the hydroxy group-containing methacrylic acid ester monomer unit in the polymer X is not less than any of the lower limits set forth above, adhesiveness of an electrode mixed material layer that is formed using a slurry composition containing the binder composition can be improved, presumably due to increased affinity of the polymer X with an electrode active material. Moreover, when the total proportional content of the hydroxy group-containing acrylic acid ester monomer unit and the hydroxy group-containing methacrylic acid ester monomer unit in the polymer X is not less than any of the lower limits set forth above, dispersibility of a slurry composition that is produced using the binder composition can be further improved. Furthermore, when the total proportional content of the hydroxy group-containing acrylic acid ester monomer unit and the hydroxy group-containing methacrylic acid ester monomer unit in the polymer X is not more than any of the upper limits set forth above, an excessive increase of flexibility of molecular chains of the polymer X can be avoided, and adhesiveness of the electrode mixed material layer can be increased.

### <<Total content of repeating unit derived from unsaturated monomer A, hydroxy group-containing acrylic acid ester monomer unit, and hydroxy group-containing methacrylic acid ester monomer unit>>

In a case in which the polymer X includes either or both of a hydroxy group-containing acrylic acid ester monomer unit and a hydroxy group-containing methacrylic acid ester monomer unit, the total proportional content of the repeating unit derived from the unsaturated monomer A, the hydroxy group-containing acrylic acid ester monomer unit, and the hydroxy group-containing methacrylic acid ester monomer unit in the polymer X when all monomer units (all repeating units) included in the polymer X are taken to be 100 mass% is preferably 80 mass% or more, and more preferably 84 mass% or more, and is preferably 97 mass% or less, and more preferably 93 mass% or less. When the total proportional content of the repeating unit derived from the unsaturated monomer A, the hydroxy group-containing acrylic acid ester monomer unit, and the hydroxy group-containing methacrylic acid ester monomer unit in the polymer X is not less than any of the lower limits set forth above, dispersibility of a slurry composition that is produced using the binder composition can be improved, adhesiveness and flexibility of an electrode mixed material layer that is formed using the slurry composition can also be improved, and output characteristics of an obtained secondary battery can also be enhanced. Moreover, when the total proportional content of the repeating unit derived from the unsaturated monomer A, the hydroxy group-containing acrylic acid ester monomer unit, and the hydroxy group-containing methacrylic acid ester monomer unit in the polymer X is not more than any of the upper limits set forth above, adhesiveness of an obtained electrode mixed material layer can be increased, and output characteristics of an obtained secondary battery can also be enhanced.

### <<(Meth)acrylamide monomer unit>>

The polymer X may further include a (meth)acrylamide monomer unit. When the polymer X further includes a (meth)acrylamide monomer unit, adhesiveness and flexibility of an obtained electrode mixed material layer can be improved.

Examples of (meth)acrylamide monomers that can form the (meth)acrylamide monomer unit in the polymer X include acrylamide, methacrylamide, N-hydroxymethylacrylamide, N-hydroxymethylmethacrylamide, N-hydroxyethylacrylamide, and N-hydroxyethylmethacrylamide. Note that one of these (meth)acrylamide monomers may be used individually, or two or more of these (meth)acrylamide monomers may be used in a freely selected ratio. Of these (meth)acrylamide monomers, acrylamide and N-hydroxyethylacrylamide are preferable from a viewpoint of improving adhesiveness and flexibility of an obtained electrode mixed material layer. Note that in the case of a unit that can correspond to another monomer unit described in the present specification, that unit is considered to not correspond to a "(meth)acrylamide monomer unit" even when the unit includes a (meth)acrylamide group.

The proportional content of the (meth)acrylamide monomer unit in the polymer X when all monomer units (all repeating units) included in the polymer X are taken to be 100 mass% is preferably 3 mass% or more, more preferably 4.5 mass% or more, and more preferably 7.5 mass% or more, and is preferably 20 mass% or less, more preferably 18 mass% or less, and even more preferably 16 mass% or less. When the proportional content of the (meth)acrylamide monomer unit in the polymer X is not less than any of the lower limits set forth above, adhesiveness of an obtained electrode mixed material layer can be increased. Moreover, when the proportional content of the (meth)acrylamide monomer unit in the polymer X is not more than any of the upper limits set forth above, adhesiveness and flexibility of an obtained electrode mixed material layer can be increased, presumably due to excessive hardening of the polymer X being inhibited. This makes it possible to enhance output characteristics of an obtained secondary battery.

### <<Production method of polymer X>>

The polymer X can, for example, be produced as described below, but is not specifically limited to being produced in this manner.

An acidic group-containing monomer and an unsaturated monomer A such as described above, and also a hydroxy group-containing acrylic acid ester monomer, a hydroxy group-containing methacrylic acid ester monomer, and so forth that can optionally be used, are mixed in a solvent such as water. Note that the acidic group-containing monomer may be mixed with the unsaturated monomer A and other optionally compounded monomers after optionally being dissolved in an alkali aqueous solution and subjected to neutralization to produce an aqueous solution. A polymerization accelerator is added to the resultant mixture. Thereafter, a polymerization initiator is added so as to initiate a polymerization reaction. Cycles of supplemental addition of a polymerization accelerator, supplemental addition of a polymerization initiator, and polymerization may subsequently be performed once, twice, or more, as necessary. The polymerization temperature when the polymerization initiator is added to initiate the polymerization reaction is preferably not lower than 35°C and not higher than 65°C, and more preferably not lower than 40°C and not higher than 55°C, for example. Moreover, the polymerization reaction time between addition of the polymerization initiator and addition of the polymerization accelerator is preferably not less than 5 minutes and not more than 40 minutes, and more preferably not less than 10 minutes and not more than 30 minutes, for example. The operations described above are preferably performed in a nitrogen atmosphere. Also, a chain transfer agent may be used as a polymerization aid in the polymerization reaction. After the polymerization reaction, a reaction inhibitor is used to end the polymerization reaction. Next, the product is cooled, is placed in an air atmosphere, and is subsequently adjusted to a pH of not lower than 7.0 and not higher than 9.0 through addition of lithium hydroxide aqueous solution or the like.

A known polymerization initiator can be used as the polymerization initiator without any specific limitations. The polymerization initiator may be potassium persulfate, sodium persulfate, ammonium persulfate, or the like, for example. Of these polymerization initiators, potassium persulfate is preferable. In a case in which a plurality of additions of a polymerization initiator are made, the added polymerization initiator may be the same or different in each addition.

Note that the amount of the polymerization initiator that is used can be adjusted as appropriate within a range that yields the desired effects according to the present disclosure.

The polymerization accelerator may be L-ascorbic acid, sodium hydrogen sulfite, or the like, for example. In a case in which a plurality of additions of a polymerization accelerator are made, the added polymerization accelerator may be the same or different in each addition. In particular, it is preferable that L-ascorbic acid as a polymerization accelerator is present in the polymerization system at the start of the polymerization reaction.

Note that the amount of the polymerization accelerator that is used can be adjusted as appropriate within a range that yields the desired effects according to the present disclosure.

### <<Weight-average molecular weight (Mw)>>

The weight-average molecular weight (Mw) of the polymer X is preferably 50,000 or more, more preferably 75,000 or more, and even more preferably 100,000 or more, is preferably less than 2,000,000, more preferably less than 1,500,000, and even more preferably less than 1,000,000, and may be less than 500,000, may be less than 400,000, or may be less than 300,000.

When the weight-average molecular weight (Mw) of the polymer X is not less than any of the lower limits set forth above, adhesiveness of an electrode mixed material layer that is formed using a slurry composition containing the binder composition can be further improved. On the other hand, when the weight-average molecular weight (Mw) of the polymer X is less than any of the upper limits set forth above, dispersibility of a slurry composition that is produced using the binder composition can be further improved.

Note that the weight-average molecular weight (Mw) of the polymer X can be controlled through polymerization conditions in the production method of the polymer X described above. Specifically, the weight-average molecular weight (Mw) of the polymer X can be controlled through the type and additive amount of a polymerization initiator, a polymerization accelerator, a chain transfer agent, or the like, the time and temperature of the polymerization reaction, and so forth.

### <<Molecular weight distribution (Mw/Mn)>>

The molecular weight distribution (Mw/Mn) of the polymer X is preferably 1.5 or more, more preferably 1.8 or more, and even more preferably 2.2 or more, and is preferably 10 or less, more preferably 7 or less, and even more preferably 4 or less.

Note that the molecular weight distribution (Mw/Mn) of the polymer X can be controlled through polymerization conditions in the production method of the polymer X described above. Specifically, the molecular weight distribution (Mw/Mn) of the polymer X can be controlled through the type and additive amount of a polymerization initiator, a polymerization accelerator, a chain transfer agent, or the like, the time and temperature of the polymerization reaction, and so forth.

The molecular weight distribution (Mw/Mn) referred to in the present disclosure can be measured by a method described in the EXAMPLES section of the present specification.

### <Solvent>

Any known solvent in which the previously described polymer X can be dissolved or dispersed can be adopted as the solvent that can be used in production of the presently disclosed binder composition. In particular, water is preferably used as the solvent. Note that a solvent such as water that was used in production of the polymer X can be used as at least a portion of a solvent that is contained in the binder composition.

### <Other components>

The presently disclosed binder composition may further contain any other components such as reinforcing materials, leveling agents, viscosity modifiers, and additives for electrolyte solution in addition to the above-described polymer X and solvent. Known components can be used as these other components without any specific limitations so long as they do not affect battery reactions. One of these components may be used individually, or two or more of these components may be used in combination in a freely selected ratio.

Moreover, the presently disclosed binder composition may further contain a particulate polymer Y that can be contained in the presently disclosed slurry composition described further below.

### <Production method of binder composition>

The presently disclosed binder composition can be produced by, for example, mixing the polymer X and other components in a solvent such as water by a known method.

For example, an aqueous solution or water dispersion of the polymer X that is obtained through the production method of the polymer X described above can be used in that form as the presently disclosed binder composition.

Alternatively, the polymer X and an electrode active material may be mixed, and then other components such as the particulate polymer Y that are optionally used may be added, for example, so as to simultaneously implement production of the binder composition and production of the subsequently described slurry composition.

### (Slurry composition for non-aqueous secondary battery electrode)

A feature of the presently disclosed slurry composition is that it contains an electrode active material and the binder composition set forth above.

The presently disclosed slurry composition has excellent dispersibility and can also cause an electrode mixed material layer formed using the slurry composition to display excellent adhesiveness and flexibility as a result of containing the presently disclosed binder composition set forth above.

Moreover, the presently disclosed slurry composition can form an electrode mixed material layer having a uniform structure as a result of having excellent dispersibility. Furthermore, as a result of an electrode mixed material layer that has been formed from the presently disclosed slurry composition also having excellent flexibility as described above, the electrode mixed material layer can inhibit the occurrence of cracking in a situation in which an electrode is subjected to rolling, folding, or the like in accordance with the shape of a secondary battery during secondary battery production, for example. Consequently, an electrode mixed material layer that has been formed from the presently disclosed slurry composition has a uniform structure and little cracking, and thus can reduce internal resistance of a secondary battery.

The presently disclosed slurry composition may optionally further contain a particulate polymer Y and a conductive material in addition to the electrode active material and the binder composition.

Moreover, the presently disclosed slurry composition normally further contains a dispersion medium such as water.

Furthermore, the presently disclosed slurry composition may further contain components other than the electrode active material, the binder composition, the particulate polymer, the conductive material, and the dispersion medium described above (i.e., other components).

The proportional content of the electrode active material in the slurry composition when all solid content contained in the slurry composition is taken to be 100 mass%, for example, is preferably not less than 90 mass% and not more than 99 mass%. When the proportional content of the electrode active material in the slurry composition is not less than the lower limit set forth above, energy density of a secondary battery can be improved. On the other hand, when the proportional content of the electrode active material in the slurry composition is not more than the upper limit set forth above, sufficiently high dispersibility of the slurry composition and adhesiveness and flexibility of an electrode mixed material layer can be ensured.

The presently disclosed slurry composition may be a slurry composition for a non-aqueous secondary battery positive electrode that contains a positive electrode active material as the electrode active material, or may be a slurry composition for a non-aqueous secondary battery negative electrode that contains a negative electrode active material as the electrode active material. Since flexibility can particularly be an issue in the case of a positive electrode mixed material layer, it is preferable for the presently disclosed slurry composition to be a slurry composition for a non-aqueous secondary battery positive electrode from a viewpoint of further improving flexibility of a positive electrode mixed material layer as a formed electrode mixed material layer.

Although the following provides a detailed description of a case in which the presently disclosed slurry composition for a non-aqueous secondary battery electrode is a slurry composition for a lithium ion secondary battery positive electrode, the presently disclosed slurry composition for a non-aqueous secondary battery electrode is not limited to the following example.

### <Electrode active material (positive electrode active material)>

A known positive electrode active material can be used as the positive electrode active material of a lithium ion secondary battery without any specific limitations.

Specifically, the positive electrode active material may be a compound that includes a transition metal such as a transition metal oxide, a transition metal sulfide, or a complex metal oxide of lithium and a transition metal, for example. Examples of the transition metal include Ti, V, Cr, Mn, Fe, Co, Ni, Cu, and Mo.

Examples of the transition metal oxide include MnO, MnO₂, V₂O₅, V₆O₁₃, TiO₂, Cu₂V₂O₃, amorphous V₂O-P₂O₅, amorphous MoO₃, amorphous V₂O₅, and amorphous V₆O₁₃.

Examples of the transition metal sulfide include TiS₂, TiS₃, amorphous MoS₂, and FeS.

Examples of the complex metal oxide of lithium and a transition metal include a lithium-containing complex metal oxide having a layered structure, a lithium-containing complex metal oxide having a spinel structure, and a lithium-containing complex metal oxide having an olivine structure.

The lithium-containing complex metal oxide having a layered structure may be lithium-containing cobalt oxide (LiCoO₂), lithium-containing nickel oxide (LiNiO₂), a lithium-containing complex oxide of Co-Ni-Mn (Li(Co Mn Ni)O₂), a lithium-containing complex oxide of Ni-Mn-Al, a lithium-containing complex oxide of Ni-Co-Al, a solid solution of LiMaO₂ and Li₂MbO₃, or the like, for example. Note that the lithium-containing complex oxide of Co-Ni-Mn may be Li[Ni_{0.5}Co_{0.2}Mn_{0.3}]O₂, Li[Ni_{1/3}C_{01/3}Mn_{1/3}]O₂, or the like. The solid solution of LiMaO₂ and Li₂MbO₃ may be xLiMaO₂·(1-x)Li₂MbO₃ or the like, for example, where x represents a number satisfying 0 < x < 1, Ma represents one or more transition metals having an average oxidation state of 3+, and Mb represents one or more transition metals having an average oxidation state of 4+. Examples of solid solutions such as described above include Li[Ni_{0.17}Li_{0.2}Co_{0.07}Mn_{0.56}]O₂.

The term "average oxidation state" as used in the present specification refers to an average oxidation state of the "one or more transition metals" and is calculated from the molar quantities and the valences of the transition metals. For example, in a case in which the "one or more transition metals" are composed of 50 mol% of Ni²⁺ and 50 mol% of Mn⁴⁺, the average oxidation state of the "one or more transition metals" is (0.5) × (2+) + (0.5) × (4+) = 3+.

The lithium-containing complex metal oxide having a spinel structure may be lithium manganate (LiMn₂O₄) or a compound in which some of the Mn in lithium manganate (LiMn₂O₄) has been substituted for another transition metal, for example. One specific example thereof is Liₛ[Mn₂₋ₜMcₜ]O₄, such as LiNi_{0.5}Mn_{1.5}O₄, where Mc represents one or more transition metals having an average oxidation state of 4+, specific examples of which include Ni, Co, Fe, Cu, and Cr, t represents a number satisfying 0 < t < 1, and s represents a number satisfying 0 ≤ s ≤ 1. Note that a lithium-rich spinel compound represented by Li₁₊ₓMn₂₋ₓO₄ (0 < x < 2) can also be used as the positive electrode active material.

The lithium-containing complex metal oxide having an olivine structure may be an olivine-type lithium phosphate compound represented by Li_{y}MdPO₄, such as olivine-type lithium iron phosphate (LiFePO₄), olivine-type lithium manganese phosphate (LiMnPO₄), or olivine-type lithium manganese iron phosphate (LiMn₁₋ₓFeₓPO₄; 0 < x < 1), where Md represents one or more transition metals having an average oxidation state of 3+, examples of which include Mn, Fe, and Co, and y represents a number satisfying 0 ≤ y ≤ 2. Moreover, in the olivine-type lithium phosphate compound represented by Li_{y}MdPO₄, some of Md may be substituted for another metal. Examples of possible substituting metals include Cu, Mg, Zn, V, Ca, Sr, Ba, Ti, Al, Si, B, and Mo.

Of the examples described above, olivine-type lithium iron phosphate is preferable from a viewpoint of improving stability against overcharging of a secondary battery.

The olivine-type lithium iron phosphate can be carbon coating layer-covered olivine-type lithium iron phosphate particles in which surfaces of olivine-type lithium iron phosphate particles are at least partially covered by a carbon coating layer.

Note that the particle diameter of the positive electrode active material is not specifically limited and can be adjusted as appropriate within a range that yields the desired effects according to the present disclosure. For example, the average particle diameter of the positive electrode active material is preferably 2 µm or less. The average particle diameter of a positive electrode active material referred to in the present disclosure is the particle diameter D50 at which, in a particle size distribution (by volume) measured using a laser diffraction particle size analyzer produced by Malvern Panalytical Ltd., cumulative volume calculated from a small diameter end of the distribution reaches 50%.

### <Binder composition>

The presently disclosed binder composition set forth above can be used as the binder composition.

The additive amount of the binder composition in production of the slurry composition can be adjusted as appropriate within a range that yields the desired effects according to the present disclosure. For example, the additive amount of the binder composition can be adjusted such that when all solid content contained in the slurry composition is taken to be 100 mass%, the proportional content of the polymer X is not less than 0.1 mass% and not more than 5 mass%, preferably not less than 0.1 mass% and not more than 3 mass%, and more preferably not less than 0.1 mass% and not more than 1 mass%. When the proportional content of the polymer X in the slurry composition is not less than the lower limit set forth above, dispersibility of the slurry composition and adhesiveness and flexibility of an electrode mixed material layer can be further improved. On the other hand, when the proportional content of the polymer X in the slurry composition is not more than any of the upper limits set forth above, internal resistance of a secondary battery can be reduced.

### <Particulate polymer Y>

The particulate polymer Y is a component that can function as a binder in conjunction with the previously described polymer X in an electrode mixed material layer.

Note that the particulate polymer Y is considered to be a different polymer to the previously described polymer X.

The particulate polymer Y is normally water-insoluble. Note that when a polymer is said to be "water-insoluble" in the present disclosure, this means that when 0.5 g (in terms of solid content) of the polymer is dissolved in 100 g of water at a temperature of 25°C, insoluble content is 90 mass% or more.

The particulate polymer Y preferably includes a hydrophilic group. By using a particulate polymer that includes a hydrophilic group (hydrophilic group-containing particulate polymer) as the particulate polymer Y, it is possible to further improve dispersibility of the slurry composition and adhesiveness and flexibility of a formed electrode mixed material layer.

No specific limitations are placed on the method by which the hydrophilic group is introduced into the particulate polymer Y. For example, a method in which a hydrophilic group-containing monomer is used in polymerization of the particulate polymer Y so as to form a hydrophilic group-containing monomer unit in the obtained particulate polymer Y can be adopted.

### <<Hydrophilic group-containing monomer unit>>

Examples of hydrophilic group-containing monomers that can form the hydrophilic group-containing monomer unit in the particulate polymer Y include acidic group-containing monomers such as carboxy group-containing monomers, sulfo group-containing monomers, and phosphate group-containing monomers and also hydroxy group-containing monomers and the like.

Any of the various acidic group-containing monomers that can be used in production of the previously described polymer X can be used as an acidic group-containing monomer (carboxy group-containing monomer, sulfo group-containing monomer, phosphate group-containing monomer, etc.).

Examples of hydroxy group-containing monomers include alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula: CH₂=CR¹-COO-(C_{q}H_{2q}O)ₚ-H (where p represents an integer of 2 to 9, q represents an integer of 2 to 4, and R¹ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

In the present disclosure, "(meth)allyl" is used to indicate "allyl" and/or "methallyl", and "(meth)acryloyl" is used to indicate "acryloyl" and/or "methacryloyl".

One of the above-described hydrophilic group-containing monomers may be used individually, or two or more of the above-described hydrophilic group-containing monomers may be used together in a freely selected ratio.

Moreover, it is preferable to use an acidic group-containing monomer (carboxy group-containing monomer, sulfo group-containing monomer, phosphate group-containing monomer, etc.) as a hydrophilic group-containing monomer from a viewpoint of even further improving dispersibility of the slurry composition and adhesiveness of a formed electrode mixed material layer, and it is more preferable to use an acidic group-containing monomer and a hydroxy group-containing monomer together, and even more preferable to use a carboxy group-containing monomer and a hydroxy group-containing monomer together as hydrophilic group-containing monomers from a viewpoint of even further improving close adherence of a formed electrode mixed material layer.

### -Proportional content-

The proportional content of the hydrophilic group-containing monomer unit in the particulate polymer Y when all monomer units included in the particulate polymer Y are taken to be 100 mass% is preferably not less than 1 mass% and not more than 10 mass%. When the proportional content of the hydrophilic group-containing monomer unit in the particulate polymer Y is within the specific range set forth above, dispersibility of the slurry composition and adhesiveness and flexibility of a formed electrode mixed material layer can be even further improved.

In a case in which the particulate polymer Y includes both an acidic group-containing monomer unit (carboxy group-containing monomer unit, sulfo group-containing monomer unit, phosphate group-containing monomer unit, etc.) and a hydroxy group-containing monomer unit together as the hydrophilic group-containing monomer unit, the proportional content of the hydrophilic group-containing monomer unit (i.e., the total proportional content of the acidic group-containing monomer unit and the hydroxy group-containing monomer unit) in the particulate polymer Y when all monomer units included in the particulate polymer Y are taken to be 100 mass% is more preferably 2 mass% or more, and even more preferably 3 mass% or more, and is more preferably 5 mass% or less, and even more preferably 4 mass% or less. When the total proportional content of the acidic group-containing monomer unit and the hydroxy group-containing monomer unit in the particulate polymer Y is within any of the specific ranges set forth above, dispersibility of the slurry composition and adhesiveness and flexibility of a formed electrode mixed material layer can be yet further improved.

In a case in which the particulate polymer Y includes an acidic group-containing monomer unit (carboxy group-containing monomer unit, sulfo group-containing monomer unit, phosphate group-containing monomer unit, etc.) as the hydrophilic group-containing monomer unit, the proportional content of the acidic group-containing monomer unit in the particulate polymer Y when all monomer units included in the particulate polymer Y are taken to be 100 mass% is preferably 0.5 mass% or more, more preferably 1 mass% or more, and even more preferably 1.5 mass% or more, and is preferably 5 mass% or less, more preferably 3 mass% or less, and even more preferably 2.5 mass% or less. When the proportional content of the acidic group-containing monomer unit in the particulate polymer Y is not less than any of the lower limits set forth above, dispersibility of the slurry composition and adhesiveness of a formed electrode mixed material layer can be even further improved. On the other hand, when the proportional content of the acidic group-containing monomer unit in the particulate polymer Y is not more than any of the upper limits set forth above, sufficiently high flexibility of a formed electrode mixed material layer can be ensured.

In a case in which the particulate polymer Y includes a hydroxy group-containing monomer unit as the hydrophilic group-containing monomer unit, the proportional content of the hydroxy group-containing monomer unit in the particulate polymer Y when all monomer units included in the particulate polymer Y are taken to be 100 mass% is preferably 0.5 mass% or more, and more preferably 1 mass% or more, and is preferably 5 mass% or less, more preferably 2 mass% or less, and even more preferably 1.5 mass% or less. When the proportional content of the hydroxy group-containing monomer unit in the particulate polymer Y is not less than any of the lower limits set forth above, flexibility of a formed electrode mixed material layer can be even further improved. On the other hand, when the proportional content of the hydroxy group-containing monomer unit in the particulate polymer Y is not more than any of the upper limits set forth above, sufficiently high dispersibility of the slurry composition and adhesiveness of a formed electrode mixed material layer can be ensured

### <<Type of particulate polymer Y>>

It is preferable to use a hydrophilic group-containing acrylic polymer or a hydrophilic group-containing conjugated diene polymer, for example, as the particulate polymer Y including a hydrophilic group, and more preferable to use a hydrophilic group-containing acrylic polymer as the particulate polymer Y including a hydrophilic group from a viewpoint of ensuring sufficiently high cycle characteristics of a secondary battery.

### -Hydrophilic group-containing acrylic polymer-

The hydrophilic group-containing acrylic polymer is a copolymer that includes at least a (meth)acrylic acid ester monomer unit in addition to the hydrophilic group-containing monomer unit described above. The hydrophilic group-containing acrylic polymer preferably further includes a nitrile group-containing monomer unit or an aromatic vinyl monomer unit. Moreover, the hydrophilic group-containing acrylic polymer may further include monomer units other than the hydrophilic group-containing monomer unit, the (meth)acrylic acid ester monomer unit, the nitrile group-containing monomer unit, and the aromatic vinyl monomer unit.

The proportional content of the hydrophilic group-containing monomer unit in the hydrophilic group-containing acrylic polymer can be set within any of the same ranges as the preferred ranges for the proportional content of the hydrophilic group-containing monomer unit in the polymer described above.

Examples of (meth)acrylic acid ester monomers that can form the (meth)acrylic acid ester monomer unit in the hydrophilic group-containing acrylic polymer include (meth)acrylic acid alkyl esters such as methyl acrylate, ethyl acrylate, butyl acrylate, methyl methacrylate, ethyl methacrylate, and 2-ethylhexyl acrylate. Note that one of these (meth)acrylic acid ester monomers may be used individually, or two or more of these (meth)acrylic acid ester monomers may be used in a freely selected ratio.

Also note that in the present specification, "(meth)acryl" is used to indicate "acryl" and/or "methacryl".

The proportional content of the (meth)acrylic acid ester monomer unit in the hydrophilic group-containing acrylic polymer when all monomer units included in the hydrophilic group-containing acrylic polymer are taken to be 100 mass% is preferably 50 mass% or more, more preferably 60 mass% or more, and even more preferably 70 mass% or more, and is preferably 90 mass% or less, more preferably 85 mass% or less, and even more preferably 80 mass% or less. When the proportional content of the (meth)acrylic acid ester monomer unit in the hydrophilic group-containing acrylic polymer is within any of the specific ranges set forth above, adhesiveness and flexibility of a formed electrode mixed material layer can be even further improved.

Any of the previously described nitrile group-containing monomers that can be used to form the polymer X can be used as a nitrile group-containing monomer that can form the nitrile group-containing monomer unit in the hydrophilic group-containing acrylic polymer.

The proportional content of the nitrile group-containing monomer unit in the hydrophilic group-containing acrylic polymer when all monomer units included in the hydrophilic group-containing acrylic polymer are taken to be 100 mass% is preferably 5 mass% or more, more preferably 10 mass% or more, and even more preferably 17 mass% or more, and is preferably 40 mass% or less, more preferably 35 mass% or less, and even more preferably 26 mass% or less. When the proportional content of the nitrile group-containing monomer unit in the hydrophilic group-containing acrylic polymer is within any of the specific ranges set forth above, adhesiveness and flexibility of a formed electrode mixed material layer can be even further improved.

Examples of aromatic vinyl monomers that can form the aromatic vinyl monomer unit in the hydrophilic group-containing acrylic polymer include aromatic vinyl monomers that are subsequently described in the "Hydrophilic group-containing conjugated diene polymer" section

The proportional content of the aromatic vinyl monomer unit in the hydrophilic group-containing acrylic polymer when all monomer units included in the hydrophilic group-containing acrylic polymer are taken to be 100 mass% is preferably 5 mass% or more, more preferably 10 mass% or more, and even more preferably 17 mass% or more, and is preferably 40 mass% or less, more preferably 35 mass% or less, and even more preferably 25 mass% or less.

### -Hydrophilic group-containing conjugated diene polymer-

The hydrophilic group-containing conjugated diene polymer is a copolymer that includes a conjugated diene monomer unit in addition to the hydrophilic group-containing monomer unit described above.

Specific examples of the conjugated diene polymer include, but are not specifically limited to, a copolymer that includes a hydrophilic group-containing monomer unit, an aromatic vinyl monomer unit, and an aliphatic conjugated diene monomer unit such as a hydrophilic group-containing styrene-butadiene copolymer (hydrophilic group-containing SBR), hydrophilic group-containing butadiene rubber (hydrophilic group-containing BR) (copolymer including a hydrophilic group-containing monomer unit and a butadiene unit), hydrophilic group-containing acrylic rubber (hydrophilic group-containing NBR) (copolymer including a hydrophilic group-containing monomer unit, an acrylonitrile unit, and a butadiene unit), and hydrogenated products thereof. One of these conjugated diene polymers may be used individually, or two or more of these conjugated diene polymers may be used in a freely selected ratio.

In particular, it is preferable to use a copolymer that includes a hydrophilic group-containing monomer unit, an aromatic vinyl monomer unit, and an aliphatic conjugated diene monomer unit such as a hydrophilic group-containing styrene-butadiene copolymer (hydrophilic group-containing SBR) from a viewpoint of even further improving adhesiveness and flexibility of a formed electrode mixed material layer.

The proportional content of the hydrophilic group-containing monomer unit in the hydrophilic group-containing conjugated diene polymer can be set within any of the same ranges as the preferred ranges for the proportional content of the hydrophilic group-containing monomer unit in the polymer described above.

Examples of conjugated diene monomers that can form the conjugated diene monomer unit in the hydrophilic group-containing conjugated diene polymer include conjugated diene compounds such as 1,3-butadiene, isoprene, 2,3-dimethyl-1,3-butadiene, and 1,3-pentadiene. One of these conjugated diene monomers may be used individually, or two or more of these conjugated diene monomers may be used in a freely selected ratio. Of these conjugated diene monomers, 1,3-butadiene is preferable.

The proportional content of the conjugated diene monomer unit in the hydrophilic group-containing conjugated diene polymer when all monomer units included in the hydrophilic group-containing conjugated diene polymer are taken to be 100 mass% is preferably 15 mass% or more, more preferably 20 mass% or more, and even more preferably 25 mass% or more, and is preferably 60 mass% or less, more preferably 50 mass% or less, and even more preferably 40 mass% or less. When the proportional content of the conjugated diene monomer unit in the hydrophilic group-containing conjugated diene polymer is within any of the specific ranges set forth above, adhesiveness and flexibility of a formed electrode mixed material layer can be yet further improved.

Examples of aromatic vinyl monomers that can form the aromatic vinyl monomer unit in the hydrophilic group-containing conjugated diene polymer include styrene, α-methylstyrene, vinyltoluene, and divinylbenzene. One of these aromatic vinyl monomers may be used individually, or two or more of these aromatic vinyl monomers may be used a freely selected ratio. Of these aromatic vinyl monomers, styrene is preferable.

The proportional content of the aromatic vinyl monomer unit in the hydrophilic group-containing conjugated diene polymer when all monomer units included in the hydrophilic group-containing conjugated diene polymer are taken to be 100 mass% is preferably 30 mass% or more, more preferably 45 mass% or more, and even more preferably 56 mass% or more, and is preferably 80 mass% or less, more preferably 75 mass% or less, and even more preferably 71 mass% or less. When the proportional content of the aromatic vinyl monomer unit in the hydrophilic group-containing conjugated diene polymer is within any of the specific ranges set forth above, adhesiveness and flexibility of a formed electrode mixed material layer can be yet further improved.

### <<Production method of particulate polymer Y>>

No specific limitations are placed on the method by which the particulate polymer Y is polymerized. For example, a method such as solution polymerization, suspension polymerization, bulk polymerization, or emulsion polymerization may be adopted. Moreover, addition polymerization such as ionic polymerization, radical polymerization, or living radical polymerization can be adopted as the polymerization reaction. The polymerization may be carried out with a commonly used emulsifier, dispersant, polymerization initiator, chain transfer agent, or the like, and the amount thereof may also be the same as commonly used.

### <<Proportional content in slurry composition>>

Although the proportional content of the particulate polymer Y in the slurry composition can be adjusted as appropriate within a range that yields the desired effects according to the present disclosure, the proportional content of the particulate polymer Y is preferably set as not less than 0.1 mass% and not more than 5 mass%, more preferably not less than 0.1 mass% and not more than 3 mass%, and even more preferably not less than 0.1 mass% and not more than 2 mass% when all solid content contained in the slurry composition is taken to be 100 mass%, for example. When the proportional content of the particulate polymer Y in the slurry composition is not less than the lower limit set forth above, dispersibility of the slurry composition and adhesiveness and flexibility of an electrode mixed material layer can be even further improved. On the other hand, when the proportional content of the polymer Y in the slurry composition is not more than any of the upper limits set forth above, internal resistance of a secondary battery can be reduced.

### <Conductive material>

The conductive material is a component having a function of ensuring electrical contact among the electrode active material in an electrode mixed material layer.

It is preferable that at least carbon nanotubes are used as the conductive material, and more preferable that carbon nanotubes and a particulate conductive material are used together as the conductive material.

When at least carbon nanotubes are used as the conductive material, internal resistance of a secondary battery can be reduced. Moreover, when carbon nanotubes and a particulate conductive material are used together as the conductive material, internal resistance of a secondary battery can be reduced while also further improving flexibility of an electrode mixed material layer.

Note that conductive materials other than the carbon nanotubes and the particulate conductive material (i.e., other conductive materials) may be used as the conductive material. For example, fibrous conductive materials other than carbon nanotubes can be used as other conductive materials.

### <<Carbon nanotubes>>

Carbon nanotubes can reduce internal resistance of a secondary battery by forming electrical conduction paths in an electrode mixed material layer. Moreover, by using carbon nanotubes, it is also possible to improve cycle characteristics and low-temperature characteristics of a secondary battery.

Any carbon nanotubes (hereinafter, also abbreviated as "CNTs") that yield the desired effects according to the present disclosure can be used as the carbon nanotubes without any specific limitations. Carbon nanotubes may be single-walled (SW) carbon nanotubes or multi-walled (MW) carbon nanotubes depending on the wall format thereof. Moreover, the carbon nanotubes that can be used as the conductive material may be single-walled carbon nanotubes, multi-walled carbon nanotubes, or a combination thereof.

The average number of walls of the CNTs is preferably 10 or less, more preferably 9 or less, even more preferably 8 or less, further preferably 2 or less, and even further preferably 1.5 or less. When the average number of walls of the CNTs is not more than any of the upper limits set forth above, cycle characteristics of a secondary battery can be further improved.

Note that the lower limit for the average number of walls of the CNTs is not specifically limited but is normally 1 or more.

The average diameter of the CNTs is preferably 0.5 nm or more, more preferably 1 nm or more, even more preferably 1.5 nm or more, further preferably 2 nm or more, and even further preferably 2.5 nm or more, and is preferably 20 nm or less, more preferably 12 nm or less, even more preferably 8 nm or less, further preferably 6 nm or less, and even further preferably 4 nm or less. When the average diameter of the CNTs is not less than any of the lower limits set forth above, aggregation of the CNTs can be sufficiently inhibited, and dispersibility of the CNTs as the conductive material can be sufficiently ensured. On the other hand, when the average diameter of the CNTs is not more than any of the upper limits set forth above, the CNTs form good electrical conduction paths in an electrode mixed material layer, further reduce internal resistance of a secondary battery, and can further improve cycle characteristics of a secondary battery.

A ratio (G/D ratio) of G band peak intensity relative to D band peak intensity in a Raman spectrum of the CNTs is preferably 0.6 or more, more preferably 1.2 or more, even more preferably 2.1 or more, further preferably 3.0 or more, and even further preferably 3.6 or more. When the G/D ratio of the CNTs is not less than any of the lower limits set forth above, cycle characteristics of a secondary battery can be further improved. Note that the upper limit for the G/D ratio of the CNTs is not specifically limited, but may be 200 or less, for example.

The BET specific surface area of the CNTs is preferably 100 m²/g or more, more preferably 200 m²/g or more, and even more preferably 250 m²/g or more, and is preferably 1,200 m²/g or less, more preferably 1,100 m²/g or less, and even more preferably 1,000 m²/g or less. When the BET specific surface area of the CNTs is within any of the specific ranges set forth above, internal resistance of a secondary battery can be further reduced.

Note that the "BET specific surface area" of CNTs referred to in the present disclosure is the nitrogen adsorption specific surface area measured by the BET method.

### [Production method of carbon nanotubes]

CNTs having the properties set forth above can be produced by a known technique such as arc discharge, laser ablation, or the super growth method without any specific limitations.

### [Proportional content in slurry composition]

Although the proportional content of the CNTs in the slurry composition can be adjusted as appropriate within a range that yields the desired effects according to the present disclosure, it is preferable that the proportional content of the CNTs is set as not less than 0.01 mass% and not more than 0.5 mass% when all solid content contained in the slurry composition is taken to be 100 mass%, for example. When the proportional content of the CNTs in the slurry composition is not less than the lower limit set forth above, internal resistance of a secondary battery can be further reduced. On the other hand, when the proportional content of the CNTs in the slurry composition is not more than the upper limit set forth above, sufficiently high flexibility of an electrode mixed material layer can be ensured.

### <<Particulate conductive material>>

The particulate conductive material is a component that can function as a conductive material in an electrode mixed material layer and that can improve flexibility of the electrode mixed material layer.

The particulate conductive material may be carbon black (for example, acetylene black, Ketjenblack^{®} (Ketjenblack is a registered trademark in Japan, other countries, or both), or furnace black), graphene, or the like without any specific limitations so long as it is a conductive material having a form other than a fibrous form (for example, a spherical or plate-like form). Note that one of these particulate conductive materials may be used individually, or two or more of these particulate conductive materials may be used in combination in a freely selected ratio.

### [Proportional content in slurry composition]

Although the proportional content of the particulate conductive material in the slurry composition can be adjusted as appropriate within a range that yields the desired effects according to the present disclosure, it is preferable that the proportional content of the particulate conductive material is set as not less than 0.1 mass% and not more than 5 mass% when all solid content contained in the slurry composition is taken to be 100 mass%, for example. When the proportional content of the particulate conductive material in the slurry composition is not less than the lower limit set forth above, flexibility of an electrode mixed material layer can be further improved. On the other hand, when the proportional content of the particulate conductive material in the slurry composition is not more than the upper limit set forth above, sufficiently high adhesiveness of an electrode mixed material layer can be ensured.

### <<Mixing ratio of CNTs and particulate conductive material>>

Although no specific limitations are placed on the mixing ratio of the CNTs and the particulate conductive material, the proportion constituted by the content of the CNTs among the total content of the CNTs and the particulate conductive material in the slurry composition, for example, is preferably 1 mass% or more, more preferably 2 mass% or more, and even more preferably 3 mass% or more, and is preferably 30 mass% or less, more preferably 20 mass% or less, and even more preferably 10 mass% or less. When the proportion constituted by the content of the CNTs among the total content of the CNTs and the particulate conductive material is not less than any of the lower limits set forth above, internal resistance of a secondary battery can be further reduced. On the other hand, when the proportion constituted by the content of the CNTs among the total content of the CNTs and the particulate conductive material is not more than any of the upper limits set forth above, flexibility of an electrode mixed material layer can be further improved.

### <Dispersion medium>

The presently disclosed slurry composition normally contains a dispersion medium such as water.

Note that a solvent such as water that was contained in the binder composition used to produce the slurry composition can, for example, be used as at least a portion of the dispersion medium of the presently disclosed slurry composition.

### <Other components>

The presently disclosed slurry composition may further contain other components besides the components described above. Examples of such other components include the same components as the previously described other components that can be contained in the binder composition, for example.

Moreover, the presently disclosed slurry composition may further contain a dispersant as another component. Carboxymethyl cellulose or a salt thereof; an aromatic sulfonic acid-formalin condensate such as a β-naphthalenesulfonic acid-formalin condensate or a salt thereof; or the like can be used as the dispersant. In particular, it is preferable to use an aromatic sulfonic acid-formalin condensate or salt thereof from a viewpoint of further improving adhesiveness of an electrode mixed material layer, and more preferable to use a sodium salt of a β-naphthalenesulfonic acid-formalin condensate.

In a case in which an aromatic sulfonic acid-formalin condensate or salt thereof is used as a dispersant, the proportional content of the aromatic sulfonic acid-formalin condensate or salt thereof in the slurry composition can be set as not less than 0.01 mass% and not more than 0.5 mass% when all solid content contained in the slurry composition is taken to be 100 mass%, for example.

### <Production method of slurry composition>

The presently disclosed slurry composition can be produced by dispersing or dissolving the above-described components in the dispersion medium, for example, but is not specifically limited to being produced in this manner. Specifically, the slurry composition can be produced by mixing the above-described components and the dispersion medium using a mixer such as a ball mill, a sand mill, a bead mill, a pigment disperser, a grinding machine, an ultrasonic disperser, a homogenizer, a planetary mixer, or a FILMIX.

Although water is typically used as the dispersion medium, an aqueous solution of a freely selected compound or a mixed solution of water and a small amount of an organic medium may alternatively be used.

Moreover, in a situation in which a conductive material such as the previously described CNTs and particulate conductive material, for example, is used in production of the presently disclosed slurry composition, the conductive material such as the CNTs and the particulate conductive material can be dispersed in a dispersion medium such as water in advance so as to produce a dispersion liquid, and then the obtained dispersion liquid can be mixed with the electrode active material, the polymer X, and other components such as the particulate polymer Y.

### (Electrode for non-aqueous secondary battery)

The presently disclosed electrode includes an electrode mixed material layer formed using the presently disclosed slurry composition set forth above and normally has a structure in which the electrode mixed material layer is formed on a current collector. Consequently, the electrode mixed material layer contains at least the electrode active material and the polymer X, and optionally further contains the particulate polymer Y, the conductive material, and so forth.

Components such as the electrode active material, the polymer X, the particulate polymer Y, and the conductive material that are contained in the electrode mixed material layer are components that were contained in the slurry composition set forth above, and the preferred proportional content of each of these components is the same as the preferred proportional content of each of these components when all solid content contained in the slurry composition is taken to be 100 mass%.

Moreover, the preferred proportion constituted by the content of the CNTs among the total content of the CNTs and the particulate conductive material that can be contained in the electrode mixed material layer is also the same as the preferred proportion constituted by the content of the CNTs among the total content of the CNTs and the particulate conductive material that can be contained in the slurry composition set forth above.

The presently disclosed electrode may further include a conductive adhesive layer containing at least a conductive material and an adhesive between the current collector and the electrode mixed material layer.

The electrode mixed material layer that is included in the presently disclosed electrode can display excellent adhesiveness and flexibility as a result of being formed using the presently disclosed slurry composition.

Moreover, the electrode mixed material layer that is included in the presently disclosed electrode has a uniform structure as a result of being formed using the presently disclosed slurry composition that has excellent dispersibility. Furthermore, the electrode mixed material layer that is included in the presently disclosed electrode also has excellent flexibility as previously described, which makes it possible to inhibit the occurrence of cracking in a situation in which the electrode is subjected to rolling, folding, or the like in accordance with the shape of a secondary battery during secondary battery production, for example. Consequently, the presently disclosed electrode can reduce internal resistance of a secondary battery as a result of including an electrode mixed material layer having a uniform structure and little cracking.

### <Current collector>

A material having electrical conductivity and electrochemical durability is used as the current collector. Specifically, the current collector may, for example, be made of a metal material such as iron, copper, aluminum, nickel, stainless steel, titanium, tantalum, gold, or platinum. Note that one of these materials may be used individually, or two or more of these materials may be used in combination in a freely selected ratio.

In a case in which an electrode that further includes the aforementioned conductive adhesive layer between the electrode mixed material layer and the current collector is to be produced, for example, a conductive adhesive layer-equipped current collector having a conductive adhesive layer formed on a current collector substrate can be used as the current collector.

The current collector substrate may be a current collector formed of a metal material such as previously described, for example.

No specific limitations are placed on the method by which the conductive adhesive layer is formed on the current collector substrate. For example, the conductive adhesive layer can be formed through application and subsequent drying on the current collector substrate of a slurry composition (also referred to as a "conductive adhesive") that contains at least a conductive material and an adhesive dispersed or dissolved in a dispersion medium or solvent such as water and that optionally further contains a dispersant dispersed or dissolved in the dispersion medium or solvent.

The conductive material is not specifically limited, and any of the previously described conductive materials that can be contained in the slurry composition can be used, for example. The adhesive is also not specifically limited, and the previously described particulate polymer Y that can be contained in the slurry composition can be used. The dispersant is also not specifically limited, and a known dispersant such as carboxymethyl cellulose or a salt thereof, for example, can be used.

Moreover, known methods can be adopted without any specific limitations as the method by which the conductive adhesive is applied onto the current collector substrate and the method by which the applied conductive adhesive is dried.

### <Electrode mixed material layer>

The electrode mixed material layer is formed, for example, through a step of applying the slurry composition onto the current collector (application step) and a step of drying the slurry composition that has been applied onto the current collector (drying step).

### <<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry composition coating on the current collector after application but before drying can be set as appropriate in accordance with the thickness of the electrode mixed material layer to be obtained after drying.

### <<Drying step>>

The slurry composition that has been applied onto the current collector can be dried by any commonly known method without any specific limitations. Examples of drying methods that can be used include drying by warm, hot, or low-humidity air; drying in a vacuum; and drying by irradiation with infrared light, an electron beam, or the like. By drying the slurry composition that has been applied onto the current collector in this manner, an electrode mixed material layer can be formed on the current collector, and an electrode including the current collector and the electrode mixed material layer can be obtained.

After the drying step, the electrode mixed material layer may be further subjected to a pressing process, such as mold pressing or roll pressing. This pressing process can improve peel strength of the electrode.

### (Non-aqueous secondary battery)

The presently disclosed secondary battery includes the presently disclosed electrode set forth above. For example, the presently disclosed secondary battery may include a positive electrode, a negative electrode, a separator, and an electrolyte solution, wherein at least one of the positive electrode and the negative electrode is the presently disclosed electrode set forth above. In other words, the presently disclosed secondary battery may be a secondary battery in which the positive electrode is the presently disclosed electrode and the negative electrode is a known negative electrode, may be a secondary battery in which the negative electrode is the presently disclosed electrode and the positive electrode is a known positive electrode, or may be a secondary battery in which the positive electrode and the negative electrode are both the presently disclosed electrode. Since flexibility can particularly be an issue in the case of a positive electrode mixed material layer, it is preferable for at least the positive electrode of the presently disclosed secondary battery to be the presently disclosed electrode from a viewpoint of further improving flexibility of a positive electrode mixed material layer as an electrode mixed material layer.

The presently disclosed secondary battery has reduced internal resistance as a result of including the presently disclosed electrode set forth above.

Although the following describes, as one example, a case in which the non-aqueous secondary battery is a lithium ion secondary battery, the presently disclosed non-aqueous secondary battery is not limited to the following example.

### <Positive electrode>

The positive electrode can be the presently disclosed electrode set forth above, though no specific limitations are made. In other words, the positive electrode can be a positive electrode that includes a current collector and a positive electrode mixed material layer formed from the presently disclosed slurry composition, for example.

In a case in which the presently disclosed electrode is not used as the positive electrode, any known positive electrode can be used as the positive electrode.

### <Negative electrode>

The negative electrode can be the presently disclosed electrode set forth above, though no specific limitations are made. In other words, the negative electrode can be a negative electrode that includes a current collector and a negative electrode mixed material layer formed from the presently disclosed slurry composition, for example.

In a case in which the presently disclosed electrode is not used as the negative electrode, any known negative electrode can be used as the negative electrode.

### <Separator>

The separator is not specifically limited and may be a microporous membrane in which a polyolefinic (polyethylene, polypropylene, polybutene, or polyvinyl chloride) resin is used, a microporous membrane in which a resin such as polyethylene terephthalate, polycycloolefin, polyether sulfone, polyamide, polyimide, polyimide amide, polyaramid, polycycloolefin, nylon, or polytetrafluoroethylene is used, a woven or non-woven fabric in which polyolefinic fiber is used, an assembly of particles formed of an insulating substance, or the like, for example. Of these examples, a microporous membrane in which a polyolefinic (polyethylene, polypropylene, polybutene, or polyvinyl chloride) resin is used is preferable in terms that the total thickness of the separator can be reduced, which can thereby increase the ratio of an electrode mixed material layer in the secondary battery and increase the volumetric capacity.

### <Electrolyte solution>

An electrolyte solution that is obtained by dissolving an electrolyte in a solvent can be used as the electrolyte solution.

The solvent may be an organic solvent in which the electrolyte can dissolve. Specifically, examples of solvents that may suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Moreover, a known additive such as vinylene carbonate (VC), fluoroethylene carbonate (FEC), or ethyl methyl sulfone, for example, may be added to the solvent.

The electrolyte may be a lithium salt. Examples of lithium salts that can be used include compounds described in JP2012-204303A. Of these lithium salts, LiPF₆, LiClO₄, and CF₃SO₃Li are preferred as electrolytes because they readily dissolve in organic solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The presently disclosed secondary battery can be produced by a known assembly method without any specific limitations. Specifically, the presently disclosed secondary battery can be produced by, for example, performing rolling, folding, or the like of the negative electrode, positive electrode, and separator obtained as described above in accordance with the battery shape, as necessary, to place these battery members inside of a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like, for example.

Note that battery members such as the positive electrode, the negative electrode, and the separator that are included in the secondary battery are typically arranged such that the positive electrode is in contact with one side of the separator and the negative electrode is in contact with the other side of the separator. More specifically, the positive electrode mixed material layer is arranged at one side of the separator and the negative electrode mixed material layer is arranged at the other side of the separator such as to be in contact with the separator.

### EXAMPLES

The following provides a specific description of the present disclosure based on examples. However, the present disclosure is not limited to these examples. In the following description, "%" and "parts" used in expressing quantities are by mass, unless otherwise specified.

Note that in the case of a polymer that is obtained through polymerization of a plurality of types of monomers, the proportional content in the polymer of a monomer unit that is formed through polymerization of a given monomer is normally, unless otherwise specified, the same as the ratio (charging ratio) of the given monomer among all monomers used in polymerization of the polymer.

Various measurements and evaluations were performed according to the following methods.

### <Weight-average molecular weight and molecular weight distribution>

The weight-average molecular weight (Mw) and number-average molecular weight (Mn) of an obtained polymer X were measured by gel permeation chromatography (GPC), and then the molecular weight distribution (Mw/Mn) was calculated.

Note that production of an eluent (0.1 M Tris buffer solution (pH 9, 0.1 M KCl)) was performed as follows.
1) 0.8 L of ultrapure water was prepared, and 12.11 g of tris(hydroxymethyl)aminomethane and 7.46 g of potassium chloride were dissolved therein.
2) 0.1 M hydrochloric acid was added dropwise to adjust the pH to 9.
3) The volume of liquid was made up to 1 L with ultrapure water in a volumetric flask after pH adjustment.

Sample preparation was performed as follows.

First, the polymer X was added to 5 mL of the eluent such as to give a solid content concentration of 0.05 wt%, and then, at 25°C, a stirring bar was placed therein and 30 minutes of stirring was performed at 300 rpm using a magnetic stirrer. A filtrate obtained through filtration of the resultant solution using a 0.45 µm membrane filter was taken as a measurement sample.

The GPC measurement conditions were as follows.
Apparatus: Agilent 1260 Infinity II HPLC (Agilent Technologies, Inc.)
Column: TSKgel GMPWXL 13 µm 300 mm × 7.8 mm
Eluent: 0.1 M Tris buffer solution (pH 9, 0.1 M KCl)
Flow rate: 0.7 mL/min
Detector: 1260 Infinity II RI detector (Agilent Technologies, Inc.)
Column temperature: 40°C
Injection volume: 200 µL
Molecular weight standard: Standard polyethylene oxide (PEO)
Sample concentration: 0.05 mass% (solid content concentration)

### <Volume-average particle diameter D50 of particulate polymer Y>

For each particulate polymer produced in the examples and comparative examples, a particle size distribution (by volume) was measured with respect to a water dispersion adjusted to a solid content concentration of 0.1 mass% using a laser diffraction particle size analyzer (produced by Beckman Coulter, Inc.; product name: LS-230), and the volume-average particle diameter D50 of the particulate polymer was determined as the particle diameter (µm) at which cumulative volume calculated from a small diameter end of the distribution reached 50%.

### <Dispersibility of slurry composition in all examples and comparative examples>

The viscosity of a slurry composition for a positive electrode was measured in accordance with JIS Z8803:1991 under conditions of a rotation speed of 60 rpm and a temperature of 25°C using a single-cylinder rotational viscometer (Brookfield B-type viscometer) and was confirmed to be within a range of 1,000 mPa·s to 2,000 mPa·s. Dispersibility of the slurry composition for a positive electrode was then evaluated in accordance with the following standard based on the value of the solid content concentration of the slurry composition for a positive electrode having a viscosity in the aforementioned range. Note that a larger value for solid content concentration in the same viscosity range (1,000 mPa·s to 2,000 mPa·s) for the same type of slurry composition indicates that solid content contained in the slurry composition is better dispersed, and thus indicates that the slurry composition has better dispersibility.
A: Solid content concentration of 52% or more
B: Solid content concentration of not less than 50% and less than 52%
C: Solid content concentration of not less than 48% and less than 50%
D: Solid content concentration of less than 48% or not dispersed (no fluidity)

### <Adhesiveness of positive electrode mixed material layer in all examples and comparative examples>

A positive electrode for a lithium ion secondary battery was cut out as a rectangular shape of 1.0 cm in width by 10 cm in length to obtain a test specimen. Cellophane tape (tape prescribed by JIS Z1522) was affixed to the surface at the positive electrode mixed material layer-side of the test specimen, and then the stress when the cellophane tape was pulled and peeled off in a direction at 90° and at a speed of 50 mm/min from one end of the test specimen was measured. A total of three measurements were made in this manner. An average value of the measurements was determined, was taken to be the peel strength (N/m), and was evaluated by the following standard. A larger peel strength indicates that the positive electrode mixed material layer has better adhesiveness and is closely adhered more strongly to the current collector.
A+: Peel strength of 25 N/m or more
A: Peel strength of 20 N/m or more
B: Peel strength of not less than 18 N/m and less than 20 N/m
C: Peel strength of not less than 16 N/m and less than 18 N/m
D: Peel strength of less than 16 N/m

### <Flexibility of positive electrode mixed material layer in all examples and comparative examples>

A cylindrical rod made of SUS was placed at the positive electrode mixed material layer-side of a positive electrode for a lithium ion secondary battery, the positive electrode was wound around the cylindrical rod, and the occurrence of cracking of the positive electrode mixed material layer was visually evaluated. This was performed using cylindrical rods of different diameters (Ø5 mm, Ø7.5 cm, and Ø10.0 cm). A smaller diameter for the smallest SUS cylindrical rod with which the positive electrode mixed material layer is preserved without cracking when the positive electrode is wound around that SUS cylindrical rod indicates that the positive electrode mixed material layer has better flexibility.
A: No cracking with all of Ø5 cm, Ø7.5 cm, and Ø10.0 cm
B: Cracking with Ø5 cm, but no cracking with Ø7.5 cm and Ø10.0 cm
C: Cracking with Ø5 cm and Ø7.5 cm, but no cracking with Ø10.0 cm
D: Cracking with all of Ø5 cm, Ø7.5 cm, and Ø10.0 cm

### <Internal resistance in Example 1-1 to Comparative Example 1-5>

A lithium ion secondary battery was charged to an SOC (State Of Charge) of 50% at 1C (C is a value expressed by rated capacity (mA)/1 hour (h)) in a 25°C atmosphere. Thereafter, the lithium ion secondary battery was subjected to 20 seconds of charging and 20 seconds of discharging centered on the SOC of 50% at each of 0.2C, 0.5C, 1.0C, 2.0C, and 3.0C in a 25°C environment. The battery voltage after 20 seconds in each case (charging side and discharging side) was plotted against the current value, and the gradient of this plot was determined as the IV resistance (Ω) (IV resistance during charging and IV resistance during discharging). The obtained IV resistance value (Ω) was evaluated by the following standard. A smaller value for the IV resistance indicates that the lithium ion secondary battery has less internal resistance.
A: IV resistance of less than 8 Ω
B: IV resistance of not less than 8 Ω and less than 10 Ω
C: IV resistance of not less than 10 Ω and less than 12 Ω
D: IV resistance of 12 Ω or more

### <Output characteristics in Example 2-1 to Comparative Example 2-1>

A lithium ion secondary battery produced in each of Example 2-1 to Comparative Example 2-1 was left at rest at a temperature of 25°C for 5 hours after injection of electrolyte solution. Next, the lithium ion secondary battery was charged to an SOC (State Of Charge) of 20% by a 0.1C constant-current method and was then subjected to 12 hours of aging at a temperature of 60°C. The lithium ion secondary battery was subsequently discharged to a cell voltage of 2.6 V by a 0.2C constant-current method at a temperature of 25°C. Thereafter, CC-CV charging (upper limit cell voltage 3.6 V) was performed with a 0.2C constant current, and then CC discharging was performed to a cell voltage of 2.6 V with a 0.2C constant current. This charging and discharging at 0.2C was repeated three times. The discharge capacity of the 3^{rd} cycle at 0.2C was taken to be the initial capacity CX. Thereafter, CC-CV charging (upper limit cell voltage 3.6 V) was performed with a 0.2C constant current, and then CC discharging was performed to a cell voltage of 2.6 V with a 2.0C constant current. The discharge capacity in this discharging was taken to be CY. A 2.0C/0.2C discharge capacity maintenance rate indicated by (CY/CX) × 100(%) was determined and was evaluated by the following standard. A larger discharge capacity maintenance rate indicates that the lithium ion secondary battery has better output characteristics.
A: 2.0C/0.2C discharge capacity maintenance rate of 60% or more
B: 2.0C/0.2C discharge capacity maintenance rate of not less than 55% and less than 60%
C: 2.0C/0.2C discharge capacity maintenance rate of not less than 50% and less than 55%
D: 2.0C/0.2C discharge capacity maintenance rate of less than 50%

### (Example 1-1)

### <Production of binder composition (aqueous solution of polymer X)>

A 10 L septum-equipped flask was charged with 770 parts of deionized water. Heating was performed to a temperature of 40°C, and the inside of the flask was purged with nitrogen gas at a flow rate of 100 mL/min. Next, 8 parts of acrylic acid (solubility in water: 80 g/100 mL) as an ethylenically unsaturated carboxylic acid monomer, 8 parts of 2-methoxyethyl acrylate (solubility in water: 11.6 g/100 mL; glass-transition temperature: -50°C) as an unsaturated monomer A, 9 parts of 2-hydroxyethyl methacrylate (HEMA; solubility in water: 35 g/100 mL) as a hydroxy group-containing methacrylic acid ester monomer, and 75 parts of 2-hydroxyethyl acrylate (β-HEA; solubility in water: 70 g/100 mL) as a hydroxy group-containing acrylic acid ester monomer were mixed and were injected into the flask using a syringe. Thereafter, 3 parts of a 10.0% aqueous solution of sodium L-ascorbate as a polymerization accelerator was charged to the flask using a syringe, and, 10 minutes later, 38 parts of a 4.0% aqueous solution of potassium persulfate as a polymerization initiator was added into the flask using a syringe. At 1 hour after the start of the reaction, the temperature was raised to 55°C, and the polymerization reaction was caused to proceed. After 2 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 3 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 4 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 5 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 6 hours, a reaction inhibitor was added, and the flask was opened to air to stop the polymerization reaction. The product was subsequently adjusted to pH 8 using an 8% aqueous solution of lithium hydroxide to yield an aqueous solution of a polymer X as a binder composition.

Note that the polymerization conversion rate of monomers in the polymerization reaction was approximately 100% and that the chemical composition (proportional content of each monomer unit) of the obtained polymer X was the same as the ratio (charging ratio) of each monomer among all monomers used in polymerization of the polymer X. Moreover, the obtained polymer X was water-soluble according to the definition in the present specification.

### <Production of particulate polymer Y>

A hydrophilic group-containing acrylic polymer was produced as a particulate polymer Y as follows.

A 1 L septum-equipped flask (reactor) including a stirrer was charged with 90 parts of deionized water and 0.5 parts of sodium lauryl sulfate as an emulsifier. The gas phase was purged with nitrogen gas, the temperature was raised to 60°C, and then 0.3 parts of ammonium persulfate (APS) as a polymerization initiator was dissolved in 20.0 parts of deionized water and was added into the flask.

Meanwhile, a monomer composition was obtained in a separate vessel (emulsion vessel) by mixing 30 parts of deionized water, 0.5 parts of sodium lauryl sulfate as an emulsifier, 76 parts of 2-ethylhexyl acrylate as a (meth)acrylic acid ester monomer, 2.0 parts of itaconic acid as a carboxy group-containing monomer, 1.0 parts of 2-hydroxyethyl acrylate (β-HEA) as a hydroxy group-containing monomer, and 21 parts of acrylonitrile as a nitrile group-containing monomer. The monomer composition was continuously added into the 1 L septum-equipped flask over 3 hours to perform polymerization. The reaction was carried out at 60°C during the addition. Once the addition was complete, a further 2 hours of stirring was performed at 80°C.

A water dispersion containing a polymer that was obtained as described above was adjusted to pH 8 through addition of 5% sodium hydroxide aqueous solution to yield a water dispersion of a particulate polymer Y (hydrophilic group-containing acrylic polymer). Note that the obtained particulate polymer Y was water-insoluble according to the definition in the present specification. The volume-average particle diameter of the particulate polymer Y was measured as previously described. The result of this measurement was a volume-average particle diameter of 135 nm.

### <Production of CNT dispersion liquid>

A CNT dispersion liquid having a solid content concentration of 1 mass% was produced by using a disper blade to stir (3,000 rpm, 10 minutes) 0.4 parts of carbon nanotubes (BET specific surface area: 250 m²/g) as a conductive material, 0.6 parts (in terms of solid content) of carboxymethyl cellulose (DAICEL 1220 produced by Daicel Corporation), and 99 parts of deionized water, and subsequently using a bead mill in which zirconia beads of 1 mm in diameter were used to perform 1 hour of mixing at a circumferential speed of 8 m/s.

### <Production of acetylene black dispersion liquid>

An acetylene black dispersion liquid having a solid content concentration of 5 mass% was produced by using a disper blade to stir (3,000 rpm, 60 minutes) 4.4 parts of acetylene black as a conductive material, 0.6 parts (in terms of solid content) of carboxymethyl cellulose (DAICEL 1220 produced by Daicel Corporation), and 95 parts of deionized water.

### <Production of slurry composition for positive electrode>

After adding together 95.6 parts of olivine-type lithium iron phosphate (LiFePO₄) (average particle diameter: 1 µm) as a positive electrode active material, 0.9 parts (in terms of solid content) of the aqueous solution of the polymer X as a binder composition, and deionized water, these materials were adjusted to a solid content concentration of 78% and were mixed (60 rpm, 50 minutes) in a planetary mixer.

Next, the acetylene black dispersion liquid was added such that the additive amount of acetylene black was 1.9 parts and was mixed (60 rpm, 10 minutes) in the planetary mixer. Next, the CNT dispersion liquid was added such that the additive amount of carbon nanotubes was 0.1 parts and was mixed (60 rpm, 10 minutes) in the planetary mixer. Finally, 1.5 parts (in terms of solid content) of the water dispersion of the particulate polymer Y was added and was mixed (40 rpm, 10 minutes) in the planetary mixer to produce a slurry composition for a positive electrode. Note that in production of the slurry composition for a positive electrode, the viscosity of the obtained slurry composition for a positive electrode (measured by single-cylinder rotational viscometer (Brookfield B-type viscometer) in accordance with JIS Z8803:1991; temperature: 25°C; rotation speed: 60 rpm) was adjusted to within a range of 1,000 mPa·s to 2,000 mPa·s through addition of water.

Dispersibility of the obtained slurry composition for a positive electrode was evaluated. The result is shown in Table 1.

### <Production of conductive adhesive layer-equipped current collector>

A conductive adhesive layer-equipped current collector produced by a method described below was used as a current collector used in production of a positive electrode.

A conductive adhesive was produced by adding together 70 parts of conductive carbon (graphite/acetylene black = 70/30 (mass ratio)) and 8 parts of carboxymethyl cellulose (DAICEL 1220 produced by Daicel Corporation) as a dispersant, stirring these materials at 3,000 rpm for 60 minutes using a disper blade, subsequently adding 22 parts in terms of solid content of the water dispersion of the particulate polymer Y, and performing a further 10 minutes of stirring at 1,500 rpm using the disper blade.

The conductive adhesive was applied onto aluminum foil serving as a current collector substrate by casting using a roll bar with a forming rate of 20 m/min and was then dried at 80°C to form a conductive adhesive layer of 1 µm in thickness. In this manner, a conductive adhesive layer-equipped current collector having a conductive adhesive layer formed on the current collector substrate was obtained.

### <Production of positive electrode for lithium ion secondary battery>

The slurry composition for a positive electrode obtained as described above was applied onto the surface at the conductive adhesive layer-side of the conductive adhesive layer-equipped current collector by a comma coater such as to have a mass per unit area after drying of 22 mg/cm², was dried at 90°C for 20 minutes and at 120°C for 20 minutes, and was subsequently heat treated at 60°C for 10 hours to obtain a positive electrode web. The positive electrode web was rolled by roll pressing to produce a sheet-shaped positive electrode including a positive electrode mixed material layer of 2.5 g/cm³ in density, a conductive adhesive layer, and aluminum foil. The sheet-shaped positive electrode was cut to 48.0 mm in width and 47 cm in length to obtain a positive electrode for a lithium ion secondary battery.

The obtained positive electrode for a lithium ion secondary battery was used to evaluate adhesiveness and flexibility of the positive electrode mixed material layer. The results are shown in Table 1.

### <Production of negative electrode for lithium ion secondary battery>

A 5 MPa pressure-resistant vessel equipped with a stirrer was charged with 65 parts of styrene as an aromatic vinyl monomer, 35 parts of 1,3-butadiene as an aliphatic conjugated diene monomer, 2 parts of itaconic acid as an ethylenically unsaturated carboxylic acid monomer, 1 part of 2-hydroxyethyl acrylate as a hydroxy group-containing monomer, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were thoroughly stirred and were then heated to 55°C to initiate polymerization.

Cooling was performed to quench the reaction at the point at which monomer consumption reached 95.0%. The water dispersion containing a polymer that was obtained in this manner was adjusted to pH 8 through addition of 5% sodium hydroxide aqueous solution. Unreacted monomer was subsequently removed through thermal-vacuum distillation. Thereafter, cooling was performed to 30°C or lower to yield a water dispersion of a particulate polymer as a binder for a negative electrode.

A planetary mixer was charged with 48.75 parts of artificial graphite and 48.75 parts of natural graphite as negative electrode active materials and 1 part (in terms of solid content) of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the water dispersion of the particulate polymer as a binder for a negative electrode that was obtained as described above was added and was kneaded therewith at a rotation speed of 40 rpm for 40 minutes. The viscosity was adjusted to 3,000 + 500 mPa·s (measured by B-type viscometer at 25°C and 60 rpm) through addition of deionized water to produce a slurry composition for a negative electrode.

The slurry composition for a negative electrode was applied onto the surface of copper foil of 15 µm in thickness serving as a current collector by a comma coater such as to have a coating weight of 10 + 0.5 mg/cm². Thereafter, the copper foil with the slurry composition for a negative electrode applied thereon was conveyed inside an oven having a temperature of 80°C for 2 minutes and an oven having a temperature of 110°C for 2 minutes at a speed of 400 mm/min so as to dry the slurry composition for a negative electrode on the copper foil and obtain a negative electrode web having a negative electrode mixed material layer formed on the current collector.

This negative electrode web was rolled by roll pressing to produce a sheet-shaped negative electrode including a negative electrode mixed material layer of 1.6 g/cm³ in density and copper foil. The sheet-shaped negative electrode was cut to 50.0 mm in width and 52 cm in length to obtain a negative electrode for a lithium ion secondary battery.

### <Production of lithium ion secondary battery>

The produced positive electrode for a lithium ion secondary battery and negative electrode for a lithium ion secondary battery were wound up using a core of 20 mm in diameter with the respective electrode mixed material layers thereof facing each other and with a separator of 15 µm in thickness (microporous membrane made of polyethylene) interposed therebetween to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, a LiPF₆ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was prepared as an electrolyte solution.

Thereafter, the compressed roll was housed inside of a laminate case made of aluminum together with 3.2 g of the electrolyte solution. After connecting a nickel lead at a specific position on the negative electrode for a secondary battery and connecting an aluminum lead at a specific position on the positive electrode for a lithium ion secondary battery, an opening of the case was thermally sealed to obtain a lithium ion secondary battery. This lithium ion secondary battery had a pouch shape of 35 mm in width, 60 mm in height, and 5 mm in thickness. The nominal capacity of the battery was 700 mAh.

The internal resistance of the obtained lithium ion secondary battery was evaluated. The result is shown in Table 1.

### (Example 1-2)

Production of a binder composition (aqueous solution of a polymer X), production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1-1 with the exception that production of the particulate polymer Y was carried out as described below. The results are shown in Table 1.

### <Production of particulate polymer Y>

A hydrophilic group-containing styrene-butadiene copolymer (hydrophilic group-containing SBR) was produced as a particulate polymer Y as follows.

A 5 MPa pressure-resistant vessel equipped with a stirrer was charged with 63 parts of styrene as an aromatic vinyl monomer, 34 parts of 1,3-butadiene as a conjugated diene monomer, 2 parts of itaconic acid as a carboxy group-containing monomer, 1 part of 2-hydroxyethyl acrylate as a hydroxy group-containing monomer, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were thoroughly stirred and were then heated to 55°C to initiate polymerization.

Cooling was performed to quench the reaction at the point at which monomer consumption reached 95.0%. The water dispersion containing a polymer that was obtained in this manner was adjusted to pH 8 through addition of 5% sodium hydroxide aqueous solution. Unreacted monomer was subsequently removed by thermal-vacuum distillation. Thereafter, the water dispersion was cooled to 30°C or lower to yield a water dispersion of hydrophilic group-containing SBR as a particulate polymer Y. Note that the obtained particulate polymer Y was water-insoluble according to the definition in the present specification. The volume-average particle diameter of the particulate polymer was measured as previously described. The result of this measurement was a volume-average particle diameter of 150 nm.

### (Examples 1-3 to 1-9, Example 1-12, and Comparative Examples 1-1 to 1-5)

Production of a binder composition (aqueous solution of a polymer X), production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1-1 with the exception that the types and/or amounts of monomers added in production of the polymer X as the binder composition were changed such that the chemical composition (proportional content of each monomer unit) of the obtained polymer X was as indicated in Tables 1 to 3. The results are shown in Tables 1 to 3.

### (Example 1-10)

Production of a binder composition (aqueous solution of a polymer X), production of a particulate polymer Y, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1-1 with the exception that a CNT dispersion liquid was not added and that the additive amount of the acetylene black dispersion liquid was changed such that the additive amount of acetylene black changed from 1.9 parts to 3.0 parts in production of the slurry composition for a positive electrode. The results are shown in Table 2.

### (Example 1-11)

Production of a binder composition (aqueous solution of a polymer X), production of a particulate polymer Y, production of a CNT dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1-1 with the exception that the additive amount of olivine-type lithium iron phosphate (LiFePO₄) as a positive electrode active material was changed from 94.8 parts to 96.2 parts, that an acetylene black dispersion liquid (amount equivalent to 1.9 parts of acetylene black) was not added, and that the additive amount of the CNT dispersion liquid was changed such that the additive amount of carbon nanotubes changed from 0.1 parts to 0.5 parts in production of the slurry composition for a positive electrode. The results are shown in Table 2.

In Tables 1 to 3, shown below:
"LFP" indicates olivine-type lithium iron phosphate;
"AA" indicates acrylic acid unit;
"AA2ME" indicates 2-methoxyethyl acrylate unit;
"EA" indicates ethyl acrylate unit;
"MA" indicates methyl acrylate unit;
"AN" indicates acrylonitrile unit;
"BA" indicates n-butyl acrylate unit;
"β-HEA" indicates 2-hydroxyethyl acrylate unit;
"HEMA" indicates 2-hydroxyethyl methacrylate unit;
"ACR" indicates hydrophilic group-containing acrylic polymer;
"SBR" indicates hydrophilic group-containing styrene-butadiene copolymer;
"CNT" indicates carbon nanotubes; and
"AcB" indicates acetylene black.

**[Table 1]**

| | | | | Example 1-1 | Example 1-2 | Example 1-3 | Example 1-4 | Example 1-5 | Example 1-6 |
|---|---|---|---|---|---|---|---|---|---|
| Slurry composition for positive electrode | Positive electrode active material | | Type | LFP | LFP | LFP | LFP | LFP | LFP |
| | Polymer X (binder composition) | Acidic group-containing monomer unit | Type | AA | AA | AA | AA | AA | AA |
| | | | Proportional content [mass%] | 8 | 8 | 8 | 8 | 8 | 8 |
| | | Unsaturated monomer A unit | Type | AA2ME | AA2ME | EA | MA | Vinyl acetate | AA2ME |
| | | | Glass-transition temperature [°C] | -50 | -50 | -22 | 3 | 32 | -50 |
| | | | Solubility in water [g/100 mL] | 11.6 | 11.6 | 1.5 | 6 | 2.5 | 11.6 |
| | | | Proportional content [mass%] | 8 | 8 | 8 | 8 | 8 | 17 |
| | | Hydroxy group-containing acrylic acid ester monomer unit | Type | β-HEA | β-HEA | β-HEA | β-HEA | β-HEA | β-HEA |
| | | | Proportional content [mass%] | 75 | 75 | 75 | 75 | 75 | 75 |
| | | Hydroxy group-containing methacrylic acid ester monomer unit | Type | HEMA | HEMA | HEMA | HEMA | HEMA | HEMA |
| | | | Proportional content [mass%] | 9 | 9 | 9 | 9 | 9 | 0 |
| | | Weight-average molecular weight (Mw) | | 150000 | 150000 | 250000 | 270000 | 270000 | 150000 |
| | | Molecular weight distribution (Mw/Mn) | | 3 | 3 | 2.5 | 3.5 | 3.5 | 3 |
| | Particulate polymer Y (hydrophilic group-containing particulate polymer) | | Type | ACR | SBR | ACR | ACR | ACR | ACR |
| | Conductive material | | Type | CNT + AcB | CNT + AcB | CNT + AcB | CNT + AcB | CNT + AcB | CNT + AcB |
| Evaluation results | | Dispersibility of slurry composition for positive electrode | | A | A | B | A | A | B |
| | | Flexibility of positive electrode mixed material layer | | A | A | A | B | B | A |
| | | Adhesiveness of positive electrode mixed material layer | | A | A | A | A | B | A |
| | | Internal resistance of secondary battery | | A | A | A | A | B | B |

**[Table 2]**

| | | | | Example 1-7 | Example 1-8 | Example 1-9 | Example 1-10 | Example 1-11 | Example 1-12 |
|---|---|---|---|---|---|---|---|---|---|
| Slurry composition for positive electrode | Positive electrode active material | | Type | LFP | LFP | LFP | LFP | LFP | LFP |
| | Polymer X (binder composition) | Acidic group-containing monomer will | Type | AA | AA | AA | AA | AA | AA |
| | | | Proportional content [mass%] | 8 | 17 | 5 | 8 | 8 | 8 |
| | | Unsaturated monomer A unit | Type | AA2ME | AA2ME | AA2ME | AA2ME | AA2ME | AA2ME |
| | | | Glass-transition temperature [°C] | -50 | -50 | -50 | -50 | -50 | -50 |
| | | | Solubility in water [g/100 mL] | 11.6 | 11.6 | 11.6 | 11.6 | 11.6 | 11.6 |
| | | | Proportional content [mass%] | 6 | 8 | 8 | 8 | 8 | 25 |
| | | Hydroxy group-containing acrylic acid ester monomer unit | Type | β-HEA | β-HEA | β-HEA | β-HEA | β-HEA | β-HEA |
| | | | Proportional content [mass%] | 75 | 75 | 75 | 75 | 75 | 67 |
| | | Hydroxy group-containing methacrylic acid ester monomer unit | Type | HEMA | HEMA | HEMA | HEMA | HEMA | HEMA |
| | | | Proportional content [mass%] | 11 | 0 | 12 | 9 | 9 | 0 |
| | | Weight-average molecular weight (Mw) | | 150000 | 180000 | 120000 | 150000 | 150000 | 150000 |
| | | Molecular weight distribution (Mw/Mn) | | 3 | 2.8 | 2.2 | 3 | 3 | 3 |
| | Particulate polymer Y (hydrophilic group-containing particulate polymer) | | Type | ACR | ACR | ACR | ACR | ACR | ACR |
| | Conductive material | | Type | CNT + AcB | CNT + AcB | CNT + AcB | AcB | CNT | CNT + AcB |
| Evaluation results | | Dispersibility of slurry composition for positive electrode | | A | B | B | A | A | D |
| | | Flexibility of positive electrode mixed material layer | | B | B | A | A | B | C |
| | | Adhesiveness of positive electrode mixed material layer | | B | B | A | A | A | C |
| | | Internal resistance of secondary battery | | B | B | B | B | A | D |

**[Table]**

| | | | | Comparative Example 1-1 | Comparative Example 1-2 | Comparative Example 1-3 | Comparative Example 1-4 | Comparative Example 1-5 |
|---|---|---|---|---|---|---|---|---|
| Slurry composition for positive electrode | Positive electrode active material | | Type | LFP | LFP | LFP | LFP | LFP |
| | Polymer X (binder composition) | Acidic group-containing monomer unit | Type | AA | AA | AA | AA | AA |
| | | | Proportional content [mass%] | 8 | 25 | 2 | 8 | 8 |
| | | Unsaturated monomer A unit | Type | AA2ME | AA2ME | AA2ME | AN | BA |
| | | | Glass-transition temperature [°C] | -50 | -50 | -50 | 97 | -55 |
| | | | Solubility in water [g/100 mL] | 11.6 | 11.6 | 11.6 | 7 | 0.2 |
| | | | Proportional content [mass%] | 2 | 8 | 8 | 8 | 8 |
| | | Hydroxy group-containing acrylic acid ester monomer unit | Type | β-HEA | β-HEA | β-HEA | β-HEA | β-HEA |
| | | | Proportional content [mass%] | 75 | 67 | 75 | 75 | 75 |
| | | Hydroxy group-containing methacrylic acid ester monomer unit | Type | HEMA | HEMA | HEMA | HEMA | HEMA |
| | | | Proportional content [mass%] | 15 | 0 | 15 | 9 | 9 |
| | | Weight-average molecular weight (Mw) | | 200000 | 250000 | 250000 | 150000 | 150000 |
| | | Molecular weight distribution (Mw/Mn) | | 3 | 2.5 | 2.5 | 3 | 3 |
| | Particulate polymer Y (hydrophilic group-containing particulate polymer) | | Type | ACR | ACR | ACR | ACR | ACR |
| | Conductive material | | Tyne | CNT + AcB | CNT + AcB | CNT + AcB | CNT + AcB | CNT + AcB |
| Evaluation results | | Dispersibility of slurry composition for positive electrode | | C | C | D | C | D |
| | | Flexibility of positive electrode mixed material layer | | D | D | D | D | D |
| | | Adhesiveness of positive electrode mixed material layer | | D | D | D | C | D |
| | | Internal resistance of secondary battery | | D | D | D | C | D |

### <Synthesis of water-soluble polymer>

### (Example 2-1)

Various operations, measurements, and evaluations were performed in the same way as in Example 1-1 with the exception that a polymer X, a particulate polymer Y, and a slurry composition for a positive electrode that were produced as described below were used. The results are shown in Table 4.

### <Production of binder composition (aqueous solution of polymer X)>

Deionized water and an 8% aqueous solution of sodium hydroxide were added to acrylic acid monomer, and then neutralization was performed to a pH of 8.0 to produce a sodium acrylate aqueous solution (solid content concentration: 3.0%). A 10 L septum-equipped flask was charged with 680 parts of deionized water. Heating was performed to a temperature of 55°C, and the inside of the flask was purged with nitrogen gas at a flow rate of 100 mL/min. Next, 9.0 parts of sodium acrylate as an acidic group-containing monomer, 40.0 parts of 2-methoxyethyl acrylate as an unsaturated monomer A (non-hydroxy group-containing (meth)acrylic acid ester monomer), 51.0 parts of 2-hydroxyethyl acrylate as a hydroxy group-containing (meth)acrylic acid ester monomer, and 0.2 parts of 1-thioglycerol as a chain transfer agent were mixed and were injected into the flask using a syringe. Thereafter, 3 parts of a 10.0% aqueous solution of sodium L-ascorbate as a polymerization accelerator was charged to the flask using a syringe, and, 10 minutes later, 25 parts of a 4.0% aqueous solution of potassium persulfate as a polymerization initiator was added into the flask using a syringe. At 1 hour after the start of the reaction, the temperature was raised to 70°C, and the polymerization reaction was caused to proceed. After 2 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 3 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 4 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 5 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 6 hours, a reaction inhibitor was added, and the flask was opened to air to stop the polymerization reaction. The product was subsequently adjusted to pH 8 using an 8% aqueous solution of sodium hydroxide to yield a water-soluble polymer. The weight-average molecular weight of the obtained water-soluble polymer was measured as previously described. The result is shown in Table 4.

Note that the chemical composition of the obtained water-soluble polymer was the same as the ratio (charging ratio) of each monomer among all monomers used in polymerization of the water-soluble polymer. Moreover, the obtained water-soluble polymer was water-soluble according to the definition in the present specification.

### <Production of particulate polymer Y>

A particulate polymer (hydrophilic group-containing acrylic polymer) was produced as a binder according to the following procedure.

A 1 L septum-equipped flask (reactor) including a stirrer was charged with 90 parts of deionized water and 0.5 parts of sodium lauryl sulfate as an emulsifier. The gas phase was purged with nitrogen gas, the temperature was raised to 60°C, and then 0.3 parts of ammonium persulfate (APS) as a polymerization initiator was dissolved in 20.0 parts of deionized water and was added into the flask.

Meanwhile, a monomer composition was obtained in a separate vessel (emulsion vessel) by mixing 30 parts of deionized water, 0.5 parts of sodium lauryl sulfate as an emulsifier, 78.0 parts of butyl acrylate, 2.5 parts of itaconic acid, 1.0 parts of 2-hydroxyethyl acrylate, and 18.5 parts of styrene. The monomer composition was continuously added into the 1 L septum-equipped flask over 3 hours to perform polymerization. The reaction was carried out at 60°C during the addition. Once the addition was complete, a further 2 hours of stirring was performed at 80°C to yield a water dispersion of a particulate polymer.

The water dispersion of the particulate polymer obtained in this manner was adjusted to pH 8 through addition of 8% sodium hydroxide aqueous solution to yield a water dispersion of the particulate polymer. Note that the obtained particulate polymer was water-insoluble according to the definition in the present specification. The volume-average particle diameter of the particulate polymer was measured as previously described. The result of this measurement was a volume-average particle diameter of 135 nm.

### <Production of slurry composition for positive electrode>

A planetary mixer was used to mix (15 rpm, 15 minutes) 95.6 parts of olivine-type lithium iron phosphate (LiFePO₄) (average particle diameter: 1 µm) as a positive electrode active material and 2.0 parts of acetylene black as a conductive additive. Thereafter, 0.9 parts (in terms of solid content) of the aqueous solution of the polymer X as a binder composition and deionized water were added, the solid content concentration was adjusted to 78%, and mixing (60 rpm, 50 minutes) was performed in the planetary mixer. Next, the viscosity of the slurry composition was adjusted to within a range of 3,000 mPa·s to 4,000 mPa·s through addition of water. Moreover, 1.5 parts (in terms of solid content) of the water dispersion of the particulate polymer Y was added and was mixed (40 rpm, 10 minutes) in the planetary mixer to produce a slurry composition for a positive electrode. Finally, the viscosity of the slurry composition was adjusted to within a range of 1,000 mPa·s to 2,000 mPa·s through addition of water. Dispersibility of the obtained slurry composition for a positive electrode was evaluated. The result is shown in Table 4. Note that in production of the slurry composition for a positive electrode, the viscosity of the obtained slurry composition for a positive electrode was measured by a single-cylinder rotational viscometer (Brookfield B-type viscometer) in accordance with JIS Z8803:1991 (temperature: 25°C; rotation speed: 60 rpm).

### (Example 2-2)

Various operations, measurements, and evaluations were performed in the same way as in Example 2-1 with the exception that a particulate polymer Y that was produced in the same way as in Example 1-2 was used. The results are shown in Table 4.

### (Examples 2-3 to 2-10 and 2-12 and Comparative Example 2-1)

Various operations, measurements, and evaluations were performed in the same way as in Example 2-1 with the exception that the types and/or amounts of monomers added in production of the polymer X as the binder composition were changed such that the chemical composition (proportional content of each monomer unit) of the obtained polymer X was as indicated in Tables 4 and 5. The results are shown in Tables 4 and 5.

### (Example 2-11)

Various operations, measurements, and evaluations were performed in the same way as in Example 2-1 with the exception that the following procedure was followed in production of a slurry composition for a positive electrode. The results are shown in Table 5.

### <Production of CNT dispersion liquid>

A CNT dispersion liquid having a solid content concentration of 1 mass% was produced by using a disper blade to stir (3,000 rpm, 10 minutes) 0.4 parts of carbon nanotubes (BET specific surface area: 250 m²/g) as a conductive material, 0.6 parts (in terms of solid content) of carboxymethyl cellulose (DAICEL 1220 produced by Daicel Corporation), and 99 parts of deionized water, and subsequently using a bead mill in which zirconia beads of 1 mm in diameter were used to perform 1 hour of mixing at a circumferential speed of 8 m/s.

### <Production of slurry composition for positive electrode>

A planetary mixer was used to mix (15 rpm, 15 minutes) 95.6 parts of olivine-type lithium iron phosphate (LiFePO₄) (average particle diameter: 1 µm) as a positive electrode active material and 1.9 parts of acetylene black as a conductive additive. Thereafter, 0.9 parts (in terms of solid content) of the aqueous solution of the polymer X as a binder composition and deionized water were added, the solid content concentration was adjusted to 78%, and mixing (60 rpm, 50 minutes) was performed in the planetary mixer. Next, the CNT dispersion liquid was added such that the additive amount of carbon nanotubes was 0.1 parts and was mixed (60 rpm, 10 minutes) in the planetary mixer. Next, the viscosity of the slurry composition was adjusted to within a range of 3,000 mPa·s to 4,000 mPa·s through addition of water. Next, 1.5 parts (in terms of solid content) of the water dispersion of the particulate polymer Y was added and was mixed (40 rpm, 10 minutes) in the planetary mixer to produce a slurry composition for a positive electrode. Finally, the viscosity of the slurry composition was adjusted to within a range of 1,000 mPa·s to 2,000 mPa·s through addition of water. Dispersibility of the obtained slurry composition for a positive electrode was evaluated. The result is shown in Table 5. Note that in production of the slurry composition for a positive electrode, the viscosity of the obtained slurry composition for a positive electrode was measured by a single-cylinder rotational viscometer (Brookfield B-type viscometer) in accordance with JIS Z8803:1991 (temperature: 25°C; rotation speed: 60 rpm).

In Tables 4 and 5, shown below:
"LFP" indicates olivine-type lithium iron phosphate;
"AA" indicates acrylic acid unit;
"AA2ME" indicates 2-methoxyethyl acrylate unit;
"EA" indicates ethyl acrylate unit;
"MA" indicates methyl acrylate unit;
"AN" indicates acrylonitrile unit;
"BA" indicates n-butyl acrylate unit;
"β-HEA" indicates 2-hydroxyethyl acrylate unit;
"HEMA" indicates 2-hydroxyethyl methacrylate unit;
"ACR" indicates hydrophilic group-containing acrylic polymer;
"SBR" indicates hydrophilic group-containing styrene-butadiene copolymer;
"Aamid" indicates acrylamide unit;
"HEAamid" indicates N-hydroxyethylacrylamide unit;
"CNT" indicates carbon nanotubes; and
"AcB" indicates acetylene black.

**[Table 4]**

| | | | | Example 2-1 | Example 2-2 | Example 2-3 | Example 2-4 | Example 2-5 | Example 2-6 |
|---|---|---|---|---|---|---|---|---|---|
| Slurry composition for positive electrode | Positive electrode active material | | Type | LFP | LFP | LFP | LFP | LFP | LFP |
| | Polymer X (binder composition) | Acidic group-containing monomer unit | Type | AA | AA | AA | AA | AA | AA |
| | | | Proportional content [mass%] | 9 | 9 | 9 | 8 | 6 | 6 |
| | | Unsaturated monomer A unit | Type | AA2ME | AA2ME | AA2ME/MA | AA2ME/ Vinyl acetate | AA2ME | AA2ME |
| | | | Glass-transition temperature [°C] | -50 | -50 | -50/-22 | -50/32 | -50 | -50 |
| | | | Solubility in water [g/100 mL] | 11.6 | 11.6 | 11.6/6 | 11.6/2.5 | 11.6 | 11.6 |
| | | | Proportional content [mass%] | 40 | 40 | 36/5 | 25/17 | 40 | 40 |
| | | Hydroxy group-containing (meth)acrylic acid ester monomer unit | Type | β-HEA | β-HEA | β-HEA | β-HEA | β-HEA | β-HEA |
| | | | Proportional content [mass%] | 51 | 51 | 50 | 50 | 46 | 44 |
| | | Acrylamide monomer unit | Type | - | - | - | - | Aamid | HEAamid |
| | | | Proportional content [mass%] | 0 | 0 | 0 | 0 | 8 | 10 |
| | | Weight-average molecular weight (Mw) | | 400000 | 400000 | 350000 | 450000 | 400000 | 400000 |
| | | Molecular weight distribution (Mw/Mn) | | 3 | 3 | 2.6 | 3.4 | 3 | 2.7 |
| | Particulate polymer Y (hydrophilic group-containing particulate polymer) | | Type | ACR | SBR | ACR | ACR | ACR | ACR |
| | | | Proportional content [mass%] | 1.5 | 1.5 | 1.5 | 1.5 | 1.5 | 1.5 |
| | Conductive material | | Type | AcB | AcB | AcB | AcB | AcB | AcB |
| Evaluation results | | Dispersibility of slurry composition for positive electrode | | A | A | A | A | A | A |
| | | Flexibility of positive electrode mixed material layer | | A | A | A | B | A | A |
| | | Adhesiveness of positive electrode mixed material layer | | A | A | A | A | A+ | A+ |
| | | Output characteristics of secondary battery | | A | A | A | B | A | A |

**[Table 5]**

| | | | | Example 2-7 | Example 2-8 | Example 2-9 | Example 2-10 | Example 2-11 | Example 2-12 | Comparative Example 2-1 |
|---|---|---|---|---|---|---|---|---|---|---|
| Slurry composition for positive electrode | Positive electrode active material | | Type | LFP | LFP | LFP | LFP | LFP | LFP | LFP |
| | Polymer X (binder composition) | Acidic group-containing monomer unit | Type | AA | AA | AA | AA | AA | AA | AA |
| | | | Proportional content [mass%] | 15 | 10 | 6 | 15 | 9 | 10 | 8 |
| | | Unsaturated monomer A unit | Type | AA2ME | AA2ME | AA2ME | AA2ME | AA2ME | EA | AA2ME |
| | | | Glass-transition temperature [°C] | -50 | -50 | -50 | -50 | -50 | -22 | -50 |
| | | | Solubility in water [g/100 mL] | 11.6 | 11.6 | 11.6 | 11.6 | 11.6 | 1.5 | 11.6 |
| | | | Proportional content [mass%] | 25 | 49 | 34 | 42 | 40 | 35 | 60 |
| | | Hydroxy group-containing (meth)acrylic acid ester monomer unit | Type | β-HEA | β-HEA | β-HEA | β-HEA | β-HEA | β-HEA | β-HEA |
| | | | Proportional content [mass%] | 55 | 41 | 60 | 38 | 51 | 55 | 32 |
| | | Acrylamide monomer unit | Type | Aamid | - | - | Aamid | - | - | - |
| | | | Proportional content [mass%] | 5 | 0 | 0 | 5 | 0 | 0 | 0 |
| | | Weight-average molecular weight (Mw) | | 400000 | 500000 | 400000 | 400000 | 400000 | 200000 | 350000 |
| | | Molecular weight distribution (Mw/Mn) | | 3 | 2.8 | 2.6 | 3 | 3 | 3 | 3 |
| | Particulate polymer Y (hydrophilic group-containing particulate polymer) | | Type | ACR | ACR | ACR | ACR | ACR | ACR | ACR |
| | | | Proportional content [mass%] | 1.5 | 1.5 | 1.5 | 1.5 | 1.5 | 1.5 | 1.5 |
| | Conductive material | | Type | AcB | AcB | AcB | AcB | CNT + AcB | AcB | AcB |
| Evaluation results | | Dispersibility of slurry composition for positive electrode | | A | B | A | B | A | D | D |
| | | Flexibility of positive electrode mixed material layer | | B | B | A | B | A | C | D |
| | | Adhesiveness of positive electrode mixed material layer | | B | B | B | B | A | D | C |
| | | Output characteristics of secondary battery | | B | B | B | B | A | D | D |

It can be seen from Tables 1 to 5 that it is possible to form an electrode mixed material layer having excellent flexibility using the binder compositions of Examples 1-1 to 1-12 and Examples 2-1 to 2-12, which each contain a polymer X that includes an acidic group-containing monomer unit and a repeating unit derived from an unsaturated monomer A having a solubility in water within a specific range and a glass-transition temperature of not higher than a specific value and in which the proportional content of the acidic group-containing monomer unit and the proportional content of the repeating unit derived from the unsaturated monomer A are within specific ranges.

In contrast, it can be seen that flexibility of an electrode mixed material layer is poor when using the binder compositions of Comparative Examples 1-1 and 2-1, which each contain a polymer in which the proportional content of a repeating unit derived from an unsaturated monomer A deviates from a specific range.

It can also be seen that flexibility of an electrode mixed material layer is also poor when using the binder compositions of Comparative Examples 1-2 and 1-3, which each contain a polymer in which the proportional content of an acidic group-containing monomer unit deviates from a specific range.

It can also be seen that flexibility of an electrode mixed material layer is also poor when using the binder composition of Comparative Example 1-4, which contains a polymer that includes a repeating unit derived from an unsaturated monomer having a glass-transition temperature exceeding a specific value instead of a repeating unit derived from an unsaturated monomer A.

It can also be seen that flexibility of an electrode mixed material layer is also poor when using the binder composition of Comparative Example 1-5, which contains a polymer that includes a repeating unit derived from an unsaturated monomer having a solubility in water falling below a specific range instead of a repeating unit derived from an unsaturated monomer A.

### INDUSTRIAL APPLICABILITY

According to the present disclosure, it is possible to provide a binder composition for a non-aqueous secondary battery electrode that can cause an electrode mixed material layer to display excellent flexibility.

Moreover, according to the present disclosure, it is possible to provide a slurry composition for a non-aqueous secondary battery electrode that can cause an electrode mixed material layer to display excellent flexibility.

Furthermore, according to the present disclosure, it is possible to provide an electrode for a non-aqueous secondary battery including an electrode mixed material layer that can display excellent flexibility.

Also, according to the present disclosure, it is possible to provide a non-aqueous secondary battery that includes this electrode for a non-aqueous secondary battery.

## Claims

1. A binder composition for a non-aqueous secondary battery electrode comprising a polymer X, wherein
the polymer X includes an acidic group-containing monomer unit in a proportion of not less than 3 mass% and not more than 20 mass% and a repeating unit derived from an unsaturated monomer A in a proportion of not less than 5 mass% and less than 50 mass%,
the unsaturated monomer A has a solubility in water of not less than 1 g/100 mL and not more than 15 g/100 mL, and
the unsaturated monomer A has a glass-transition temperature of 40°C or lower.

2. The binder composition for a non-aqueous secondary battery electrode according to claim 1, wherein the polymer X includes the repeating unit derived from the unsaturated monomer A in a proportion of 20 mass% or less.

3. The binder composition for a non-aqueous secondary battery electrode according to claim 2, wherein the polymer X includes a hydroxy group-containing acrylic acid ester monomer unit in a proportion of not less than 55 mass% and not more than 90 mass%.

4. The binder composition for a non-aqueous secondary battery electrode according to claim 2, wherein the polymer X has a weight-average molecular weight of not less than 50,000 and less than 500,000.

5. The binder composition for a non-aqueous secondary battery electrode according to claim 2, wherein the polymer X includes a hydroxy group-containing methacrylic acid ester monomer unit in a proportion of not less than 2 mass% and not more than 30 mass%.

6. The binder composition for a non-aqueous secondary battery electrode according to claim 2, wherein the unsaturated monomer A includes one or more selected from the group consisting of 2-methoxyethyl acrylate, ethyl acrylate, methyl acrylate, and vinyl acetate.

7. The binder composition for a non-aqueous secondary battery electrode according to claim 1, wherein the polymer X includes either or both of a hydroxy group-containing acrylic acid ester monomer unit and a hydroxy group-containing methacrylic acid ester monomer unit, and total proportional content of the hydroxy group-containing acrylic acid ester monomer unit and the hydroxy group-containing methacrylic acid ester monomer unit in the polymer X is not less than 30 mass% and not more than 90 mass%.

8. The binder composition for a non-aqueous secondary battery electrode according to claim 7, wherein
the polymer X includes either or both of a hydroxy group-containing acrylic acid ester monomer unit and a hydroxy group-containing methacrylic acid ester monomer unit, and
total proportional content of the repeating unit derived from the unsaturated monomer A, the hydroxy group-containing acrylic acid ester monomer unit, and the hydroxy group-containing methacrylic acid ester monomer unit in the polymer X is 80 mass% or more.

9. The binder composition for a non-aqueous secondary battery electrode according to claim 1, wherein the polymer X includes a (meth)acrylamide monomer unit in a proportion of not less than 3 mass% and not more than 20 mass%.

10. A slurry composition for a non-aqueous secondary battery electrode comprising: an electrode active material; and the binder composition for a non-aqueous secondary battery electrode according to any one of claims 1 to 9.

11. The slurry composition for a non-aqueous secondary battery electrode according to claim 10, further comprising a particulate polymer Y including a hydrophilic group.

12. The slurry composition for a non-aqueous secondary battery electrode according to claim 11, wherein proportional content of the particulate polymer Y is not less than 0.1 mass% and not more than 5 mass% when all solid content contained in the slurry composition for a non-aqueous secondary battery electrode is taken to be 100 mass%.

13. The slurry composition for a non-aqueous secondary battery electrode according to claim 10, wherein the electrode active material includes olivine-type lithium iron phosphate.

14. The slurry composition for a non-aqueous secondary battery electrode according to claim 10, further comprising a conductive material that includes one or more carbon nanotubes.

15. The slurry composition for a non-aqueous secondary battery electrode according to claim 14, wherein the conductive material further includes a particulate conductive material.

16. An electrode for a non-aqueous secondary battery comprising an electrode mixed material layer formed using the slurry composition for a non-aqueous secondary battery electrode according to claim 10.

17. A non-aqueous secondary battery comprising the electrode for a non-aqueous secondary battery according to claim 16.
